# EUROPEAN PATENT APPLICATION

(11) **EP 4 216 333 A1**
(43) Date of publication of application: **26.07.2023**
(21) Application number: 21869099.8
(22) Date of filing: 19.08.2021
(51) Int. Cl.: H01M 10/0585, H01M 10/052, H01M 10/0562, H01M 50/548

(54) **BATTERY AND LAMINATED BATTERY**

(30) Priority: 18.09.2020 JP 2020156934
(71) Applicant: Panasonic Intellectual Property Management Co., Ltd., Osaka-shi, Osaka 540-6207 (JP)
(72) Inventor: KOGA Eiichi, Osaka-shi Osaka 540-6207 (JP)
(74) Representative: Grünecker Patent- und Rechtsanwälte PartG mbB
(86) International application number: PCT/JP2021/030305
(87) International publication number: WO 2022/059412

(57) **Abstract**

A battery includes: a power generation element that includes at least one battery cell including an electrode layer, a counter electrode layer, and a solid electrolyte layer positioned between the electrode layer and the counter electrode layer; an electrode insulation film; a counter electrode insulation film; an electrode terminal that is electrically connected to the electrode layer; and a counter electrode terminal that is electrically connected to the counter electrode layer. The power generation element includes an electrode main surface that is a main surface formed of a surface of the electrode layer, a counter electrode main surface that is a main surface facing the electrode main surface and formed of a surface of the counter electrode layer, and a side surface. The electrode insulation film includes a first side surface covering portion that covers a part of the side surface and an electrode main surface covering portion that covers the electrode main surface. The counter electrode insulation film includes a second side surface covering portion that covers another part of the side surface and a counter electrode main surface covering portion that covers the counter electrode main surface. The electrode terminal includes a counter electrode insulation film covering portion that covers the second side surface covering portion and an electrode contact portion that is in contact with the electrode main surface. The counter electrode terminal includes an electrode insulation film covering portion that covers the first side surface covering portion and a counter electrode contact portion that is in contact with the counter electrode main surface.

## Description

### Technical Field

The present disclosure relates to a battery and a laminated battery.

### Background Art

A voltage, an output, and a battery capacity can be increased by extracting a current from power generation element portions of batteries by using a lead wire and connecting the batteries in series and/or parallel. As a technique related to such battery structure and connection of batteries, for example, there is disclosed in PTL 1 an all-solid-state battery with a structure in which an insulant is used for a side wall of a power generation element and a current is extracted by a tab lead. In PTL 2, there is disclosed an assembled battery in which multiple batteries are connected to each other by a tab lead.

### Citation List

### Patent Literature

PTL 1: Japanese Unexamined Patent Application Publication No. 2007-335294
PTL 2: Japanese Unexamined Patent Application Publication No. 2005-216631

### Summary of Invention

### Technical Problem

In the conventional techniques, improvement of the reliability of a battery is demanded.

The present disclosure provides a battery having high reliability and the like.

### Solution to Problem

A battery according to an aspect of the present disclosure includes: a power generation element that includes at least one battery cell including an electrode layer, a counter electrode layer, and a solid electrolyte layer positioned between the electrode layer and the counter electrode layer; an electrode insulation film; a counter electrode insulation film; an electrode terminal that is electrically connected to the electrode layer; and a counter electrode terminal that is electrically connected to the counter electrode layer, in which the power generation element includes an electrode main surface that is a main surface formed of a surface of the electrode layer, a counter electrode main surface that is a main surface facing the electrode main surface and formed of a surface of the counter electrode layer, and a side surface, the electrode insulation film includes a first side surface covering portion that covers a part of the side surface and an electrode main surface covering portion that covers the electrode main surface, the counter electrode insulation film includes a second side surface covering portion that covers another part of the side surface and a counter electrode main surface covering portion that covers the counter electrode main surface, the electrode terminal includes a counter electrode insulation film covering portion that covers the second side surface covering portion and an electrode contact portion that is in contact with the electrode main surface, and the counter electrode terminal includes an electrode insulation film covering portion that covers the first side surface covering portion and a counter electrode contact portion that is in contact with the counter electrode main surface.

A laminated battery according to another aspect of the present disclosure includes the above-described multiple batteries, in which the multiple of the batteries are electrically connected to each other in parallel and laminated.

### Advantageous Effects of Invention

According to the present disclosure, a battery having high reliability and the like can be implemented.

### Brief Description of Drawings

[Fig. 1] Fig. 1 is a cross-sectional view and a top view illustrating a schematic configuration of a battery according to an Embodiment 1.
[Fig. 2] Fig. 2 is a cross-sectional view and a top view illustrating a schematic configuration of a battery according to a Modification 1 of the Embodiment 1.
[Fig. 3] Fig. 3 is a cross-sectional view illustrating a schematic configuration of another battery according to the Modification 1 of the Embodiment 1.
[Fig. 4A] Fig. 4A is a top view illustrating a schematic configuration of a battery according to a Modification 2 of the Embodiment 1.
[Fig. 4B] Fig. 4B is a bottom view illustrating a schematic configuration of the battery according to the Modification 2 of the Embodiment 1.
[Fig. 5] Fig. 5 is a top view illustrating a schematic configuration of another battery according to the Modification 2 of the Embodiment 1.
[Fig. 6A] Fig. 6A is a top view illustrating a schematic configuration of a battery according to a Modification 3 of the Embodiment 1.
[Fig. 6B] Fig. 6B is a bottom view illustrating a schematic configuration of the battery according to the Modification 3 of the Embodiment 1.
[Fig. 7] Fig. 7 is a top view illustrating a schematic configuration of another battery according to the Modification 3 of the Embodiment 1.
[Fig. 8] Fig. 8 is a cross-sectional view and a top view illustrating a schematic configuration of a laminated battery according to an Embodiment 2.
[Fig. 9] Fig. 9 is a cross-sectional view illustrating a schematic configuration of a battery according to a Modification 1 of the Embodiment 2.

### Description of Embodiments

### (Summary of Present Disclosure)

A battery according to an aspect of the present disclosure includes: a power generation element that includes at least one battery cell including an electrode layer, a counter electrode layer, and a solid electrolyte layer positioned between the electrode layer and the counter electrode layer; an electrode insulation film; a counter electrode insulation film; an electrode terminal that is electrically connected to the electrode layer; and a counter electrode terminal that is electrically connected to the counter electrode layer, in which the power generation element includes an electrode main surface that is a main surface formed of a surface of the electrode layer, a counter electrode main surface that is a main surface facing the electrode main surface and formed of a surface of the counter electrode layer, and a side surface, the electrode insulation film includes a first side surface covering portion that covers a part of the side surface and an electrode main surface covering portion that covers the electrode main surface, the counter electrode insulation film includes a second side surface covering portion that covers another part of the side surface and a counter electrode main surface covering portion that covers the counter electrode main surface, the electrode terminal includes a counter electrode insulation film covering portion that covers the second side surface covering portion and an electrode contact portion that is in contact with the electrode main surface, and the counter electrode terminal includes an electrode insulation film covering portion that covers the first side surface covering portion and a counter electrode contact portion that is in contact with the counter electrode main surface.

With this configuration, a battery with high reliability can be implemented. The conventional battery has a structure in which a terminal is drawn out by a lead wire or the like and is used by being connected with another battery or a load by using the lead wire. However, the lead wire is likely to be put in contact with a power generation element and to short-circuit and in the structure the lead wire protrudes; thus, downsizing is difficult. Additionally, in a routing portion of the lead wire, short-circuit caused by the lead wire and damage of the lead wire are likely to be caused; thus, there is a problem in the reliability. Such a problem becomes more evident along with downsizing and an increase in layers of the battery.

According to configurations of the electrode insulation film and the counter electrode insulation film that cover a part of the side surface and the main surface of the power generation element in the present aspect, at least a part of end surfaces of the electrode layer and the counter electrode layer of the battery is covered with the insulation film to bind the end surfaces of the layers and suppress delamination of the layers in the power generation element. Additionally, isolation between the two electrodes can be improved with the insulation film arranged therebetween. Moreover, in the structure, the electrode terminal and the counter electrode terminal cover the electrode insulation film and the counter electrode insulation film and are connected with the electrode main surface and the counter electrode main surface to extract a current; thus, the power generation element, the insulation films, and the terminals are integral with each other, and short-circuit caused by the terminals and damage of the terminals are less likely to occur than a case where the lead wire is drawn out. With such operational effects, a battery having high reliability in which a short-circuit between the electrode and the counter electrode and damage of the terminals are suppressed can be implemented.

For example, the electrode main surface may include an electrode-exposed region, which is not covered with the electrode insulation film and the counter electrode insulation film, in a position overlapped with the counter electrode main surface covering portion in plan view, the counter electrode main surface may include a counter electrode-exposed region, which is not covered with the electrode insulation film and the counter electrode insulation film, in a position overlapped with the electrode main surface covering portion in plan view, the electrode contact portion may be in contact with the electrode-exposed region, and the counter electrode contact portion may be in contact with the counter electrode-exposed region.

With this configuration, the electrode contact portion and the counter electrode contact portion are in contact with the electrode-exposed region and the counter electrode-exposed region that are positioned on terminal sides of the electrode main surface and the counter electrode main surface and are near end portions of the electrode main surface and the counter electrode main surface. Therefore, the electrode terminal and the counter electrode terminal can be electrically connected with the electrode layer and the counter electrode layer without being widely routed around to inner sides of the electrode main surface and the counter electrode main surface.

For example, the counter electrode insulation film covering portion may cover the counter electrode main surface covering portion, and the electrode insulation film covering portion may cover the electrode main surface covering portion.

With this configuration, a structure in which each of the electrode terminal and the counter electrode terminal sandwiches an end portion of the power generation element from two sides in a lamination direction is obtained; thus, delamination of the layers in the power generation element can be further suppressed. Additionally, when the batteries are laminated for use, the terminals are put in contact and electrically connected to each other only with laminating; thus, the laminated battery can be formed easily.

For example, at least either of the electrode insulation film and the counter electrode insulation film may contain resin.

With this configuration, the impact resistance performance and the durability performance for thermal shock caused by a cooling/heating cycle or the like and stress, of the battery are improved by the shock-absorbing properties of the resin included in the insulation film. Additionally, with the shock-absorbing properties of the resin, delamination of the terminals covering the insulation films can be suppressed even after the cooling/heating cycle.

For example, the side surface may include a first side surface and a second side surface facing the first side surface, the first side surface covering portion may cover the first side surface, and the second side surface covering portion may cover the second side surface.

With this configuration, with an effect of the electrode insulation film and the counter electrode insulation film of sandwiching and binding the layers in the power generation element from two ends in plan view, delamination of the layers can be effectively suppressed, and a battery having high reliability can be implemented.

For example, at least either of the electrode terminal and the counter electrode terminal may be formed of a conductive material containing resin.

With this configuration, impact from outside and thermal shock and stress caused by the cooling/heating cycle or the like can be absorbed by the shock-absorbing properties of the resin included in the terminal, and a battery having high reliability can be implemented.

For example, the electrode insulation film and the counter electrode insulation film each may contain first thermosetting resin, the electrode terminal and the counter electrode terminal each may contain second thermosetting resin, and a curing temperature of the first thermosetting resin may be equal to or higher than a curing temperature of the second thermosetting resin.

With this configuration, the curing temperature in the formation of the electrode terminal and the counter electrode terminal can be set to be equal to or lower than the curing temperature of the first thermosetting resin; thus, the electrode terminal and the counter electrode terminal can be formed while securing the insulation properties, sticking properties, and the like of the electrode insulation film and the counter electrode insulation film.

For example, at least either of the electrode insulation film and the counter electrode insulation film may have a lamination structure of a plurality of insulation layers.

With this configuration, a defect such as a hole and a thin portion due to unevenness in thickness in the insulation film is unlikely to occur, and the insulation properties and the fineness of the insulation film can be improved. Therefore, when the terminal is formed, the conductive material of the terminal is unlikely to enter the insulation film, and short-circuit is suppressed. Additionally, also in a case of forming a thick insulation film, delamination due to stress and the like of curing during the insulation film formation is unlikely to occur, and the insulation properties and the impact-absorbing performance of the insulation film can be enhanced.

For example, the electrode insulation film and the counter electrode insulation film may be in contact with each other between the electrode terminal and the counter electrode terminal.

With this configuration, the insulation properties between the two terminals can be improved.

For example, the at least one battery cell may be a plurality of battery cells, and the plurality of battery cells may be electrically connected to each other in series and laminated.

With this configuration, a high voltage can be obtained; thus, a high energy battery with high reliability can be implemented.

For example, the solid electrolyte layer may include a solid electrolyte having lithium-ion conductivity.

With this configuration, a battery with high reliability in a lithium-ion battery including a solid electrolyte can be implemented.

A laminated battery according to another aspect of the present disclosure includes the above-described multiple batteries, in which the multiple of the batteries are electrically connected to each other in parallel and laminated.

With this configuration, it is the laminated battery including the multiple batteries described above; thus, a large-capacity laminated battery with high reliability can be implemented.

For example, the plurality of the batteries may be laminated such that a pair of the electrode main surfaces or a pair of the counter electrode main surfaces of adjacent batteries out of the plurality of the batteries are adjacent to each other.

With this configuration, with the same batteries laminated one above the other, a large-capacity laminated battery with high reliability can be implemented with high mass productivity.

Embodiments are specifically described below with reference to the drawings.

Note that, any of the Embodiments described below indicate a comprehensive or specific example. Numerical values, shapes, materials, constituents, arrangement position and connection mode of the constituents, and the like indicated in the Embodiments below are examples and not intended to limit the present disclosure. Additionally, out of the constituents in the Embodiments below, a constituent that is not described in an independent claim indicating the primary concept is described as an arbitrary constituent.

Moreover, in the present specification, a term indicating a relationship between elements such as parallel and a term indicating a shape of an element such as a cuboid and a numerical value range are expressions representing not only the strict means but also meaning that there is also included a substantially equivalent range that is, for example, a difference of a few percent.

Furthermore, each diagram is not necessarily a strict illustration. In each diagram, substantially the same configurations are provided with the same reference sign, and duplicated descriptions are omitted or simplified.

Additionally, in the present specification and the drawings, an x axis, a y axis, and a z axis indicate the three axes of a three-dimensional Cartesian coordinate system. In each Embodiment, a z axis direction is a thickness direction of the battery. Moreover, in the present specification, the "thickness direction" is a direction perpendicular to a plane in which the layers are laminated.

Furthermore, in the present specification, "in plan view" means a case where the battery is viewed along a lamination direction in the battery cell, and a "thickness" in the present specification is a length in the lamination direction of the batteries and the layers.

Additionally, in the present specification, "in" and "out" in "inside", "outside", and the like are in and out in a case where the battery is viewed along the lamination direction in the battery.

Moreover, in the present specification, the terms "upper" and "lower" in the configuration of the battery do not indicate an upper direction (vertically above) and a lower direction (vertically below) in an absolute spatial recognition and are used as terms defined by a relative positional relationship based on the lamination order in the lamination configuration. Furthermore, the terms "above" and "below" are applied for not only a case where two constituents are arranged at an interval from each other and another constituent exists between the two constituents but also a case where two constituents are arranged to be closely attached with each other and the two constituents are in contact with each other.

### (Embodiment 1)

First, a battery according to the present embodiment is described.

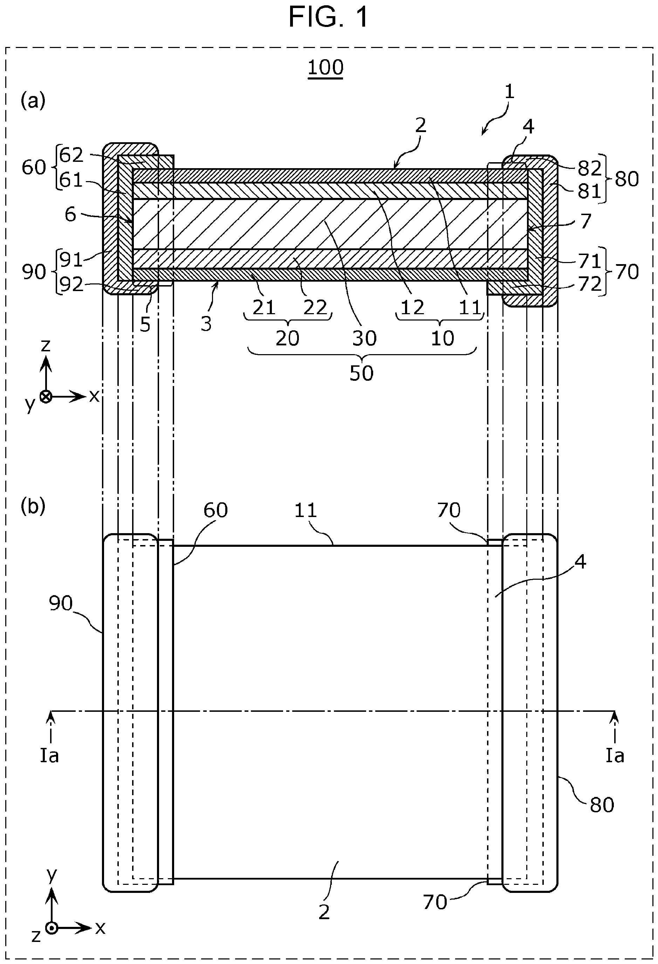

Fig. 1 is a cross-sectional view and a top view illustrating a schematic configuration of a battery according to an Embodiment 1. Specifically, Fig. 1(a) is a cross-sectional view of a battery 100 according to the present embodiment, and Fig. 1(b) is a plan view in which the battery 100 is viewed from an upper side in the z axis direction. In Fig. 1(a), a cross section at a position indicated by the Ia-Ia line in Fig. 1(b) is illustrated.

As illustrated in Fig. 1, the battery 100 has a cuboid structure with a small thickness. The battery 100 includes a power generation element 1, an electrode insulation film 60, a counter electrode insulation film 70, an electrode terminal 80, and a counter electrode terminal 90, the power generation element 1 including at least one battery cell 50 including an electrode layer 10, a counter electrode layer 20, and a solid electrolyte layer 30. The battery 100 is an all-solid-state battery, for example. Hereinafter, the electrode insulation film 60 and the counter electrode insulation film 70 may be simply referred to as an "insulation film", collectively. Additionally, the electrode terminal 80 and the counter electrode terminal 90 may be simply referred to as a "terminal", collectively.

In the present embodiment, the power generation element 1 includes a single battery cell 50. The shape of the power generation element 1 is a cuboid, for example. Note that, the shape of the power generation element 1 is not limited to a cuboid and may be another shape such as a column or a polygonal column. The power generation element 1 includes an electrode main surface 2 that is a main surface formed of a surface of the electrode layer 10, a counter electrode main surface 3 that is a main surface facing the electrode main surface 2 and formed of a surface of the counter electrode layer 20, and side surfaces. In the present embodiment, the side surfaces of the power generation element 1 are formed of four surfaces that are two pairs of two facing surfaces and include a first side surface 6 and a second side surface 7 that are surfaces on the sides of shorter sides of the power generation element 1 in plan view.

The electrode main surface 2 and the counter electrode main surface 3 are surfaces perpendicular to a lamination direction in the power generation element 1. The electrode main surface 2 is formed of a main surface in the electrode layer 10 that is on an opposite side of a solid electrolyte layer 30 side. The electrode main surface 2 includes an electrode-exposed region 4, which is not covered with the electrode insulation film 60 and the counter electrode insulation film 70, in a position overlapped with a later-described counter electrode main surface covering portion 72 in plan view. The counter electrode main surface 3 is formed of a main surface in the counter electrode layer 20 that is on an opposite side of a solid electrolyte layer 30 side. The counter electrode main surface 3 includes a counter electrode-exposed region 5, which is not covered with the electrode insulation film 60 and the counter electrode insulation film 70, in a position overlapped with a later-described electrode main surface covering portion 62 in plan view.

The first side surface 6 and the second side surface 7 are surfaces that extend from end portions of the electrode main surface 2 and the counter electrode main surface 3 in a direction crossing the electrode main surface 2 and the counter electrode main surface 3 to connect the electrode main surface 2 and the counter electrode main surface 3. In the present embodiment, the first side surface 6 and the second side surface 7 are surfaces parallel to each other in the lamination direction in the power generation element 1. The first side surface 6 and the second side surface 7 have a positional relationship to face each other. Additionally, the first side surface 6 and the second side surface 7 are parallel to each other.

At least a part of the main surface and the side surface of the power generation element 1 may be processed into a rough surface with concavity and convexity in terms of improvement in the adhesiveness with the electrode insulation film 60 and the counter electrode insulation film 70. For example, at least a part of the main surface and the side surface of the power generation element 1 may be rubbed with sandpaper of #800 to #1000 to be processed into a rough surface with concavity and convexity, and thereafter the electrode insulation film 60 and the counter electrode insulation film 70 may be applied and formed. The surface roughness in this case has the maximum height Rz of 10 µm or greater and 20 µm or smaller, for example. With this, the surface energy of the power generation element 1 can be dispersed, and thus an effect of surface tension is reduced, the wettability is improved when the insulation film is applied, and the shape accuracy can be enhanced. Thus, the positional relationship accuracy between the insulation film and the terminal formed on the insulation film is improved, and therefore an effect of suppressing short-circuit is obtained. Additionally, with an effect of an increase in the surface roughness, the surface area of the power generation element 1 is increased, and the sticking properties between the surface of the power generation element 1 and the insulation film can be improved with the operational effect.

The battery cell 50 includes the electrode layer 10, the counter electrode layer 20, and the solid electrolyte layer 30 positioned between the electrode layer 10 and the counter electrode layer 20. The electrode layer 10 includes an electrode current collector 11 and an electrode active material layer 12 positioned between the electrode current collector 11 and the solid electrolyte layer 30. The counter electrode layer 20 includes a counter electrode current collector 21 and a counter electrode active material layer 22 positioned between the counter electrode current collector 21 and the solid electrolyte layer 30. In other words, the battery cell 50 includes the electrode current collector 11, the electrode active material layer 12 arranged in contact with the electrode current collector 11, the counter electrode current collector 21, the counter electrode active material layer 22 arranged in contact with the counter electrode current collector 21, and the solid electrolyte layer 30 arranged between the electrode active material layer 12 and the counter electrode active material layer 22 and including a solid electrolyte. The electrode active material layer 12 and the counter electrode active material layer 22 are arranged between the electrode current collector 11 and the counter electrode current collector 21. The battery cell 50 has a structure in which the electrode layer 10, the solid electrolyte layer 30, and the counter electrode layer 20 are laminated in this order. In more detail, the battery cell 50 has a structure in which the electrode current collector 11, the electrode active material layer 12, the solid electrolyte layer 30, the counter electrode active material layer 22, and the counter electrode current collector 21 are laminated in this order.

Each of the electrode current collector 11, the electrode active material layer 12, the solid electrolyte layer 30, the counter electrode active material layer 22, and the counter electrode current collector 21 is rectangular in plan view. The shape of the electrode current collector 11, the electrode active material layer 12, the solid electrolyte layer 30, the counter electrode active material layer 22, and the counter electrode current collector 21 in plan view is not particularly limited and may be a shape other than rectangular such as circular, oval, or polygonal.

The electrode current collector 11, the electrode active material layer 12, the solid electrolyte layer 30, the counter electrode active material layer 22, and the counter electrode current collector 21 have the same shape, position, and size in plan view. The electrode current collector 11, the electrode active material layer 12, the solid electrolyte layer 30, the counter electrode active material layer 22, and the counter electrode urrent collector 21 may have different shapes, positions, and sizes in plan view, respectively. For example, in plan view, the counter electrode active material layer 22 may be greater than the electrode active material layer 12. Additionally, the solid electrolyte layer 30 may be greater than the electrode active material layer 12 and the counter electrode active material layer 22, may cover side surfaces of each of the electrode active material layer 12 and the counter electrode active material layer 22, and may be in contact with the electrode current collector 11 and the electrode active material layer 12.

In the present embodiment, a main surface in the electrode current collector 11 on the opposite side of an electrode active material layer 12 side forms the electrode main surface 2.

The electrode active material layer 12 is laminated in contact with one main surface of the electrode current collector 11. Note that, another layer such as a joining layer formed of a conductive material may be provided between the electrode current collector 11 and the electrode active material layer 12. Additionally, the electrode layer 10 may not include the electrode current collector 11 and, for example, a current collector of another electrode layer 10 or counter electrode layer 20, a terminal for extraction, a substrate supporting the battery 100, and the like may function as a current collector of the electrode active material layer 12. That is, the electrode layer 10 may include only the electrode active material layer 12 out of the electrode current collector 11 and the electrode active material layer 12.

In the present embodiment, a main surface in the counter electrode current collector 21 on the opposite side of the counter electrode active material layer 22 forms the counter electrode main surface 3.

Additionally, the counter electrode active material layer 22 is laminated in contact with one main surface of the counter electrode current collector 21. Note that, another layer such as a joining layer formed of a conductive material may be provided between the counter electrode current collector 21 and the counter electrode active material layer 22. Moreover, the counter electrode layer 20 may not include the counter electrode current collector 21 and, for example, a current collector of another electrode layer 10 or counter electrode layer 20, a terminal for extraction, a substrate supporting the battery 100, and the like may function as a current collector of the counter electrode active material layer 22. That is, the counter electrode layer 20 may include only the counter electrode active material layer 22 out of the counter electrode current collector 21 and the counter electrode active material layer 22.

In the present disclosure, for example, one of the electrode layer 10 and the counter electrode layer 20 is a positive electrode layer including a positive electrode active material layer and a positive electrode current collector as the electrode active material layer 12 and the electrode current collector 11, and the other is a negative electrode layer including a negative electrode active material layer and a negative electrode current collector as the counter electrode active material layer 22 and the counter electrode current collector 21. Hereinafter, the positive electrode active material layer and the negative electrode active material layer may be simply referred to as an "active material layer", collectively. Additionally, the positive electrode current collector and the negative electrode current collector may be simply referred to as a "current collector", collectively.

The material of the current collector is not particularly limited as long as the current collector is formed of a material having conductivity. For the current collector, for example, a foil-like body, a plate-like body, a web-like body, or the like consisting of stainless, nickel, aluminum, iron, titanium, copper, palladium, gold and platinum, or an alloy of two or more types of the above may be used. The material of the current collector may be arbitrarily selected taking into consideration no occurrence of melting and decomposition in a manufacturing process and at an operation temperature and an operation pressure, and a battery operation potential and conductivity relating to the current collector. Additionally, the material of the current collector can be selected also in accordance with a required tensile strength and heat resistance. The current collector may be a high-strength electrolytic copper foil or a clad material in which different metal foils are laminated, for example.

The thickness of the current collector is, for example, within a range from 10 µm or greater and 100 µm or smaller; however, the thickness smaller than 10 µm may be set as long as handling in the manufacturing process, the characteristic aspect such as a current amount, and the reliability are satisfied.

The positive electrode active material layer at least includes a positive electrode active material. The positive electrode active material layer is a layer mainly formed of a positive electrode material such as the positive electrode active material. The positive electrode active material is a substance in which a metal ion such as a lithium (Li) ion or a magnesium (Mg) ion is inserted into or detached from a crystal structure at a potential higher than that of the negative electrode and oxidation or reduction is performed accordingly. The type of the positive electrode active material can be arbitrarily selected in accordance with the type of the battery, and a widely known positive electrode active material can be used.

The positive electrode active material may include a compound containing lithium and a transition metal element and, more specifically, oxide containing lithium and a transition metal element, a phosphate compound containing lithium and a transition metal element, and the like may be included. As the oxide containing lithium and a transition metal element, for example, lithium nickel composite oxide such as LiNiₓM₁₋ₓO₂ (where M is at least one element out of Co, Al, Mn, V, Cr, Mg, Ca, Ti, Zr, Nb, Mo, and W, and x is 0 < x ≤ 1), layered oxide such as lithium cobalt oxide (LiCoO₂), lithium nickel oxide (LiNiO₂), and lithium manganese oxide (LiMn₂O₄), lithium manganese oxide having a spinel structure (LiMn₂O₄, Li₂MnO₃, LiMnO₂), and the like are used. As the phosphate compound containing lithium and a transition metal element, for example, lithium iron phosphate having an olivine structure (LiFePO₄), and the like are used. Additionally, sulfide such as sulfur (S) and lithium sulfide (Li₂S) can also be used for the positive electrode active material, and in this case, positive electrode active material particles with coating or addition of a lithium niobate (LiNbO₃) can be used as the positive electrode active material. Note that, for the positive electrode active material, only one type of those materials may be used, or a combination of two or more types of those materials may be used.

As described above, the positive electrode active material layer may at least include the positive electrode active material. The positive electrode active material layer may be a compound agent layer formed of a compound agent of the positive electrode active material and another additive material. As the other additive material, for example, a solid electrolyte such as an inorganic system solid electrolyte or a sulfide system solid electrolyte, a conduction aid such as acetylene black, a binder for binding such as polyethylene oxide or polyvinylidene fluoride, and the like may be used. In the positive electrode active material layer, with the positive electrode active material and the other additive material such as the solid electrolyte mixed at a predetermined ratio, the lithium-ion conductivity in the positive electrode active material layer can be improved, and also the electronic conductivity can be improved. As the solid electrolyte, for example, a solid electrolyte that is exemplified as a later-described solid electrolyte of the solid electrolyte layer 30 can be used.

Note that, the thickness of the positive electrode active material layer is 5 µm or greater and 300 µm or smaller, for example.

The negative electrode active material layer at least includes a negative electrode active material. The negative electrode active material layer is a layer mainly formed of a negative electrode material such as the negative electrode active material. The negative electrode active material indicates a substance in which a metal ion such as a lithium (Li) ion or magnesium (Mg) ion is inserted into or detached from a crystal structure at a potential lower than that of the positive electrode and oxidation or reduction is performed accordingly. The type of the negative electrode active material can be arbitrarily selected in accordance with the type of the battery, and a widely known negative electrode active material can be used.

For the negative electrode active material, for example, a carbon material such as natural graphite, artificial graphite, carbon graphite fiber, or resin heat treatment carbon, or an alloy system material that is formed into a compound agent with the solid electrolyte can be used. As the alloy system material, for example, a lithium alloy such as LiAl, LiZn, Li₃Bi, Li₃Cd, Li₃Sb, Li₄Si, Li_{4.4}Pb, Li_{4.4}Sn, Li_{0.17}C, and LiCe, oxide of lithium and a transition metal element such as lithium titanate (Li₄Ti₅O₁₂), metal oxide such as zinc oxide (ZnO) and silicon oxide (SiOₓ), and the like can be used. Note that, for the negative electrode active material, only one type of those materials may be used, or a combination of two or more types of those materials may be used.

As described above, the negative electrode active material layer may include at least the negative electrode active material. The negative electrode active material layer may be a compound agent layer formed of a compound agent of the negative electrode active material and another additive material. As the other additive material, for example, a solid electrolyte such as an inorganic system solid electrolyte or a sulfide system solid electrolyte, a conduction aid such as acetylene black, a binder for binding such as polyethylene oxide or polyvinylidene fluoride, and the like may be used. In the negative electrode active material layer, with the negative electrode active material and the other additive material such as the solid electrolyte mixed at a predetermined ratio, the lithium-ion conductivity in the negative electrode active material layer can be improved, and also the electronic conductivity can be improved. As the solid electrolyte, for example, a solid electrolyte that is exemplified as the later-described solid electrolyte of the solid electrolyte layer 30 can be used.

Note that, the thickness of the negative electrode active material layer is 5 µm or greater and 300 µm or smaller, for example.

The solid electrolyte layer 30 is arranged between the electrode active material layer 12 and the counter electrode active material layer 22 and is in contact with the electrode active material layer 12 and the counter electrode active material layer 22.

The solid electrolyte layer 30 at least includes the solid electrolyte. The solid electrolyte layer 30 includes the solid electrolyte as a main component, for example. The solid electrolyte may be a widely known solid electrolyte for a battery that does not have the electronic conductivity but the ion conductivity. For the solid electrolyte, for example, a solid electrolyte that conducts a metal ion such as a lithium ion or a magnesium ion can be used. The type of the solid electrolyte may be arbitrarily selected in accordance with the conducted ion type. For the solid electrolyte, for example, an inorganic system solid electrolyte such as a sulfide system solid electrolyte or an oxide system solid electrolyte can be used. As the sulfide system solid electrolyte, for example, lithium-containing sulfide of Li₂S-P₂S₅ system, Li₂S-SiS₂ system, Li₂S-B₂S₃ system, Li₂S-GeS₂ system, Li₂S-SiS₂-LiI system, Li₂S-SiS₂-Li₃PO₄ system, Li₂S-Ge2S₂ system, Li₂S-GeS₂-P₂S₅ system, Li₂S-GeS₂-ZnS system, and the like can be used. As the oxide system solid electrolyte, for example, lithium-containing metal oxide such as Li₂O-SiO₂ and Li₂O-SiO₂-P₂O₅, lithium-containing metal nitride such as LiₓP_{y}O_{1-z}N_{z}, lithium phosphate (Li₃PO₄), and lithium-containing transition metal oxide such as lithium titanium oxide can be used. As the solid electrolyte, only one type of those materials may be used, or a combination of two or more types of those materials may be used.

Note that, the solid electrolyte layer 30 may contain a binder for binding such as polyethylene oxide or polyvinylidene fluoride in addition to the above-described solid electrolyte.

The thickness of the solid electrolyte layer 30 is 5 µm or greater and 150 µm or smaller, for example.

Note that, the material of the solid electrolyte may be formed of an aggregate of particles. Additionally, the material of the solid electrolyte may be formed of a sintered structure.

As described above, the battery 100 includes the electrode insulation film 60, the counter electrode insulation film 70, the electrode terminal 80, and the counter electrode terminal 90. The electrode insulation film 60 and the counter electrode insulation film 70 respectively cover the first side surface 6 and the second side surface 7 that are two side surfaces on the sides of shorter sides of the power generation element 1 in plan view. The electrode terminal 80 and the counter electrode terminal 90 are in contact with the electrode insulation film 60 and the counter electrode insulation film 70, respectively. The electrode terminal 80 and the counter electrode terminal 90 are arranged facing each other. Thus, with the first side surface 6 and the second side surface 7 that are two ends of the power generation element 1 in plan view covered with the insulation films, the layers in the power generation element 1 can be bound from the two ends in plan view, and delamination of the layers can be effectively suppressed. Note that, the electrode insulation film 60 and the counter electrode insulation film 70 may cover adjacent surfaces in the side surfaces of the power generation element 1 instead of the facing surfaces.

The electrode insulation film 60 includes a first side surface covering portion 61 that covers a part of the side surface of the power generation element 1 and the electrode main surface covering portion 62 that covers the electrode main surface 2. In the present embodiment, the electrode insulation film 60 does not cover the counter electrode main surface 3. With this, the counter electrode-exposed region 5 can be wide. Note that, the electrode insulation film 60 may cover a part of the counter electrode main surface 3.

The first side surface covering portion 61 covers the first side surface 6 in contact with the first side surface 6 and is joined to the first side surface 6, for example. The first side surface covering portion 61 continuously covers from an end on an electrode main surface 2 side of the first side surface 6 to an end on a counter electrode main surface 3 side, for example. In the example illustrated in Fig. 1, the first side surface covering portion 61 covers the entire surface of the first side surface 6. Additionally, the first side surface covering portion 61 covers also a part of a side surface on the side of longer side of the power generation element 1 in plan view (that is, an XZ plane in the power generation element 1), which is a surface adjacent to the first side surface 6. Note that, the first side surface covering portion 61 may cover the entirety of the side surface on the side of longer side of the power generation element 1 in plan view. Moreover, the first side surface covering portion 61 may cover a part of the counter electrode main surface 3.

The electrode main surface covering portion 62 is in contact with the electrode main surface 2 and is joined to the electrode main surface 2, for example. The electrode main surface covering portion 62 covers the end portion of the electrode main surface 2. The electrode main surface covering portion 62 covers the surface of the electrode current collector 11, for example.

The first side surface covering portion 61 and the electrode main surface covering portion 62 are continuous and are connected to each other. That is, the electrode insulation film 60 is routed around from the first side surface 6 onto the electrode main surface 2 formed of the main surface of the electrode current collector 11 and continuously covers a ridge line between the first side surface 6 and the electrode main surface 2.

The counter electrode insulation film 70 includes a second side surface covering portion 71 that covers another part of the side surface of the power generation element 1 and the counter electrode main surface covering portion 72 that covers the counter electrode main surface 3. In the present embodiment, the counter electrode insulation film 70 does not cover the electrode main surface 2. With this, the electrode-exposed region 4 can be wide. Note that, the counter electrode insulation film 70 may cover a part of the electrode main surface 2.

The second side surface covering portion 71 covers the second side surface 7 in contact with the second side surface 7 and is joined to the second side surface 7, for example. The second side surface covering portion 71 continuously covers from an end of the second side surface 7 on an electrode main surface 2 side to an end on a counter electrode main surface 3 side, for example. In the example illustrated in Fig. 1, the second side surface covering portion 71 covers the entire surface of the second side surface 7. Additionally, the second side surface covering portion 71 covers also a part of a side surface on the side of longer side of the power generation element 1 in plan view (that is, an XZ plane in the power generation element 1), which is a surface adjacent to the second side surface 7. Note that, the second side surface covering portion 71 may cover the entirety of the side surface on the side of longer side of the power generation element 1 in plan view. Moreover, the second side surface covering portion 71 may cover a part of the electrode main surface 2.

The counter electrode main surface covering portion 72 is in contact with the counter electrode main surface 3 and is joined to the counter electrode main surface 3, for example. The counter electrode main surface covering portion 72 covers the end portion of the counter electrode main surface 3. The counter electrode main surface covering portion 72 covers the surface of the counter electrode current collector 21, for example.

The second side surface covering portion 71 and the counter electrode main surface covering portion 72 are continuous and are connected to each other. That is, the counter electrode insulation film 70 is routed around from the second side surface 7 onto the counter electrode main surface 3 formed of the main surface of the counter electrode current collector 21 and continuously covers a ridge line between the second side surface 7 and the counter electrode main surface 3.

Thus, in the present embodiment, the insulation film continuously covers also a part of the side surface end portion on the side of longer side of the power generation element 1 in plan view from a corner and the ridge line positioned at the end portion of each of the first side surface 6 and the second side surface 7 of the power generation element 1. With such an insulation film configuration in which the corner portion and the ridge line portion are covered, the operational effect that the corner portion of the power generation element 1 that is likely to be delaminated is fixed while protecting the power generation element 1 more firmly is also obtained, and the reliability of the battery 100 is further enhanced.

The insulation film may be an electric insulation body. The insulation film contains resin, for example. The insulation film contains resin with the insulation properties as a main component, for example. The resin may include epoxy system resin, acryl system resin, polyimide system resin, silsesquioxane, and the like, for example. Specifically, the insulation film contains applicable thermosetting resin such as thermosetting epoxy system resin of liquid system or powder system, for example. With such applicable thermosetting resin in the form of liquid or the form of powder applied to the side surface and the main surface of the power generation element 1 and thermally cured, the side surface and the main surface of the power generation element 1 can be covered with the insulation film and can be joined and fixed to each other. Additionally, the insulation film may have a lamination structure of multiple insulation layers formed of the same material or different materials.

The insulation film may be a material more flexible than the configuration members of the power generation element 1 (for example, the current collector, the active material, and the solid electrolyte). The Young's modulus of the insulation film is 10 GPa or greater and 40 GPa or smaller, for example. Specifically, for the insulation film, epoxy system resin of such a range of the Young's modulus can be used. With this, impact on a portion covered with the insulation film can be absorbed, and the battery 100 can be protected. Additionally, even under the cooling/heating cycle environment, the proportionally flexible insulation film absorbs stress acting on an interface between the insulation film and the side surface and the like of the power generation element 1, the stress being caused by the mutual differences of the thermal expansion coefficient between the insulation film and the power generation element 1. Therefore, a negative effect on the structure of the constituents of the battery 100 such as occurrence of a crack or delamination can be suppressed.

Note that, for the flexibility of the configuration material of the power generation element 1 and the insulation film (for example, elasticity such as the Young's modulus), the interrelationship of the flexibility between the configuration material of the power generation element 1 and the insulation film can be compared based on a comparison of the magnitude relationship between traces obtained by pressing a rigid body indenter as with measurement of Vickers hardness. For example, when the indenter is pressed onto each portion of a cross section of the power generation element 1 with the same force, if the insulation film is in a state of being concaved at the greatest degree compared with the configuration material of the power generation element 1, it can be determined that the insulation film is more flexible than the configuration material of the power generation element 1.

Additionally, from the perspective of relaxation of stress on the power generation element 1 generated by expansion or contraction due to a temperature change, relaxation of heat stress, the reliability of joining with a side wall, and the like, a material including various resin materials more flexible than the current collector may be used for the insulation film.

For example, the Young's modulus of the insulation film is lower than the Young's modulus of metal forming the electrode current collector 11 and the counter electrode current collector 21. With this, the stress on the power generation element 1 that is generated by a temperature change in the current collector is relaxed by deformation of the insulation film.

Additionally, in terms of relaxation of the stress on the power generation element 1 that is generated by expansion or contraction of the solid electrolyte layer 30 due to a temperature change and repetition of charge and discharge, and improvement of the reliability of the battery 100, the Young's modulus of the insulation film may be lower than the Young's modulus of the solid electrolyte layer 30.

Moreover, in terms of relaxation of the stress on the power generation element 1 that is generated by expansion or contraction of the electrode active material layer 12 and the counter electrode active material layer 22 due to a temperature change, and improvement of the reliability of the battery 100, the Young's modulus of the insulation film may be lower than the Young's moduli of the electrode active material layer 12 and the counter electrode active material layer 22. The mutual relationship between the Young's moduli can be compared based on the displacement characteristics to the pressure when a probe is pressed, the magnitude relationship between the concaves, or the like, for example.

The electrode insulation film 60 and the counter electrode insulation film 70 may be formed of the same material or may be formed of materials different from each other. When the electrode insulation film 60 and the counter electrode insulation film 70 are formed of materials different from each other, the material, the physical properties, and the like of the above-described insulation film may be satisfied by at least either of the electrode insulation film 60 and the counter electrode insulation film 70.

The thickness of the insulation film may be even or may be uneven. In terms of the electric insulation properties, the thickness of a thin portion of the insulation film may be 10 µm or greater. Additionally, in terms of the impact absorption, the thickness of the thinnest portion of the insulation film may be 100 µm or greater. Moreover, in terms of insulation of atmospheric air and moisture, the thickness of the thinnest portion of the insulation film may be 1 mm or greater. An upper limit of the thickness of the insulation film is not particularly limited. The thickness of the insulation film may be set to an appropriate thickness that can achieve both the weight energy density and volume energy density of the battery and an effect of protection and the like by the insulation film. In terms of reduction in the thickness of the battery 100 that has a great effect on the volume energy density and also protection of the side surface of the power generation element 1 that is likely to be broken due to impact and the like, the thickness of the electrode main surface covering portion 62 may be smaller than the thickness of the first side surface covering portion 61. Likewise, the thickness of the counter electrode main surface covering portion 72 may be smaller than the thickness of the second side surface covering portion 71.

The electrode terminal 80 is a member in the form of film that covers the counter electrode insulation film 70 from outside and is electrically connected to the electrode layer 10. In detail, the electrode terminal 80 is routed around from a surface on an outer side of the counter electrode insulation film 70 to the electrode main surface 2 formed of the main surface of the electrode current collector 11 and continuously covers the counter electrode insulation film 70 and at least a part of the electrode main surface 2. The electrode terminal 80 covers an end portion of the power generation element 1 from the two sides in the lamination direction and the outside of the power generation element 1. The electrode terminal 80 is not in contact with the side surface of the power generation element 1 and the counter electrode main surface 3. The electrode terminal 80 may be in contact with the side surface of the power generation element 1 as long as not being in contact with the counter electrode layer 20.

The electrode terminal 80 includes a counter electrode insulation film covering portion 81 that covers the second side surface covering portion 71 of the counter electrode insulation film 70 and an electrode contact portion 82 that is in contact with the electrode main surface 2. The counter electrode insulation film covering portion 81 and the electrode contact portion 82 are continuous and are connected to each other.

The counter electrode insulation film covering portion 81 covers a surface on the outer side of the counter electrode insulation film 70, in other words, on the opposite side of a power generation element 1 side of the counter electrode insulation film 70. The counter electrode insulation film covering portion 81 is in contact with the surface on the outer side of the counter electrode insulation film 70 and is joined to the counter electrode insulation film 70, for example. The counter electrode insulation film covering portion 81 covers at least the second side surface covering portion 71. In the present embodiment, the counter electrode insulation film covering portion 81 covers the second side surface covering portion 71 and the counter electrode main surface covering portion 72 of the counter electrode insulation film 70 from outside and is in contact with the second side surface covering portion 71 and the counter electrode main surface covering portion 72. That is, the counter electrode insulation film covering portion 81 is routed around from the outer side surface of the second side surface covering portion 71 of the counter electrode insulation film 70 to an outer side surface of the counter electrode main surface covering portion 72 and covers the counter electrode insulation film 70. The counter electrode insulation film covering portion 81 covers a part of the counter electrode main surface covering portion 72. In plan view, an end portion on an inner side of the counter electrode insulation film covering portion 81 is positioned on the outer side of an end portion on an inner side of the counter electrode main surface covering portion 72. Thus, with the counter electrode insulation film covering portion 81 covering the counter electrode main surface covering portion 72, a structure in which the electrode terminal 80 sandwiches the end portion of the power generation element 1 from the lamination direction is obtained, and delamination of the layers of the power generation element 1 can be suppressed. Note that, the counter electrode insulation film covering portion 81 may not cover the counter electrode main surface covering portion 72.

The electrode contact portion 82 covers at least a part of the electrode main surface 2 and is joined to the electrode main surface 2. The electrode contact portion 82 is electrically connected to the electrode current collector 11, for example. The electrode contact portion 82 is in contact with the electrode-exposed region 4 in the electrode main surface 2. With this, since the electrode contact portion 82 is in contact with the electrode-exposed region 4 positioned near an end portion on an electrode terminal 80 side of the electrode main surface 2, the electrode terminal 80 does not need to be routed greatly around an inner side of the electrode main surface 2, and the electrode terminal 80 and the electrode layer 10 can be electrically connected to each other easily. In plan view, the end portion on the inner side of the portion in which the counter electrode insulation film covering portion 81 covers the counter electrode main surface covering portion 72 and the end portion on the inner side of the portion in which the electrode contact portion 82 covers the electrode main surface 2 are in the same position, for example.

The counter electrode terminal 90 is a member in the form of film that covers the electrode insulation film 60 from outside and is electrically connected to the counter electrode layer 20. In detail, the counter electrode terminal 90 is routed around from a surface on an outer side of the electrode insulation film 60 to the counter electrode main surface 3 formed of the main surface of the counter electrode current collector 21 and continuously covers the electrode insulation film 60 and at least a part of the counter electrode main surface 3. The counter electrode terminal 90 covers an end portion of the power generation element 1 from the two sides in the lamination direction and the outside of the power generation element 1. The counter electrode terminal 90 is not in contact with the side surface of the power generation element 1 and the electrode main surface 2. The counter electrode terminal 90 may be in contact with the side surface of the power generation element 1 as long as not being in contact with the electrode layer 10.

The counter electrode terminal 90 includes an electrode insulation film covering portion 91 that covers the first side surface covering portion 61 of the electrode insulation film 60 and a counter electrode contact portion 92 that is in contact with the counter electrode main surface 3. The electrode insulation film covering portion 91 and the counter electrode contact portion 92 are continuous and are connected to each other.

The electrode insulation film covering portion 91 covers a surface on the outer side of the electrode insulation film 60, in other words, on the opposite side of a power generation element 1 side of the electrode insulation film 60. The electrode insulation film covering portion 91 is in contact with the surface on the outer side of the electrode insulation film 60 and is joined to the electrode insulation film 60, for example. The electrode insulation film covering portion 91 covers at least the first side surface covering portion 61. In the present embodiment, the electrode insulation film covering portion 91 covers the first side surface covering portion 61 and the electrode main surface covering portion 62 of the electrode insulation film 60 from outside and is in contact with the first side surface covering portion 61 and the electrode main surface covering portion 62. That is, the electrode insulation film covering portion 91 is routed around from the outer side surface of the first side surface covering portion 61 of the electrode insulation film 60 to an outer side surface of the electrode main surface covering portion 62 and covers the electrode insulation film 60. The electrode insulation film covering portion 91 covers a part of the electrode main surface covering portion 62. In plan view, an end portion on an inner side of the electrode insulation film covering portion 91 is positioned on the outer side of an end portion on an inner side of the electrode main surface covering portion 62. Thus, with the electrode insulation film covering portion 91 covering the electrode main surface covering portion 62, a structure in which the counter electrode terminal 90 sandwiches the end portion of the power generation element 1 from the lamination direction is obtained, and delamination of the layers of the power generation element 1 can be suppressed. Note that, the electrode insulation film covering portion 91 may not cover the electrode main surface covering portion 62.

The counter electrode contact portion 92 covers at least a part of the counter electrode main surface 3 and is joined to the counter electrode main surface 3. The counter electrode contact portion 92 is electrically connected to the counter electrode current collector 21, for example. The counter electrode contact portion 92 is in contact with the counter electrode-exposed region 5 in the counter electrode main surface 3. With this, since the counter electrode contact portion 92 is in contact with the counter electrode-exposed region 5 positioned near an end portion on a counter electrode terminal 90 side of the counter electrode main surface 3, the counter electrode terminal 90 does not need to be routed greatly around an inner side of the counter electrode main surface 3, and the counter electrode terminal 90 and the counter electrode layer 20 can be electrically connected to each other easily. In plan view, the end portion on the inner side of the portion in which the electrode insulation film covering portion 91 covers the electrode main surface covering portion 62 and the end portion on the inner side of the portion in which the counter electrode contact portion 92 covers the counter electrode main surface 3 are in the same position, for example.

The terminal is formed of a conductive material having electronic conductivity. In terms of relaxation of the stress on the power generation element 1 that is generated by expansion or contraction of the layers of the power generation element 1 due to a temperature change, the terminal is formed of a conductive material containing resin, for example. For example, the Young's modulus of the terminal is lower than the Young's modulus of the metal forming the electrode current collector 11 and the counter electrode current collector 21. With this, the stress on the terminal generated by a temperature change is relaxed by deformation of the terminal itself and deformation of the insulation film underlying the terminal. Since the terminal can be deformed with the insulation film, it is possible to follow deformation of the power generation element 1 that occurs due to thermal shock and the charge and discharge cycle, and delamination and damage in the power generation element 1 can be suppressed. Additionally, in terms of relaxation of the stress on the power generation element 1 and improvement of the reliability of the battery 100, the Young's modulus of the terminal may be lower than the Young's modulus of the solid electrolyte layer 30. Moreover, in terms of relaxation of the stress on the power generation element 1 that is generated by expansion or contraction of the electrode active material layer 12 and the counter electrode active material layer 22 due to a temperature change, and improvement of the reliability of the battery 100, the Young's modulus of the terminal may be lower than the Young's moduli of the electrode active material layer 12 and the counter electrode active material layer 22. The mutual relationship between the Young's moduli can be compared based on the displacement characteristics to the pressure when a probe is pressed, the magnitude relationship between the concaves, or the like, for example.

Additionally, the conductive material forming the terminal contains at least one of silver, copper, nickel, zinc, aluminum, palladium, gold, platinum, and an alloy of combination of those metals, for example. Moreover, the terminal may be formed of a material in which a solid electrolyte contains conductive particles or particles of a semiconductor material. With this, as described above, resistance components can be reduced while relaxing the stress generated by expansion or contraction of the current collector due to a temperature change, and thus a high-capacity battery with a small loss can be implemented.

Additionally, in terms of the adjustability of the thermal expansion coefficient and the flexibility (the Young's modulus), the terminal may be formed of a material in which a conductive resin paste contains a solid electrolyte and the like.

The resin contained in the conductive material forming the terminal may be thermoplastic resin or may be thermosetting resin. Among those, in terms of easy formation of the terminal, the terminal may contain thermosetting resin.

When both the terminal and insulation film contain resin, a processing temperature of the resin contained in the terminal is lower than a processing temperature of the resin contained in the insulation film. In a case of the thermosetting resin, the processing temperature is a curing temperature for accelerating thermal curing of the resin, for example. In a case of the thermoplastic resin, the processing temperature is a phase transition temperature for flux of the resin (for example, a glass transition point or a melting point), for example. When the insulation film contains first thermosetting resin and the terminal contains second thermosetting resin, a curing temperature of the first thermosetting resin is equal to or higher than a curing temperature of the second thermosetting resin, for example. With this, the curing temperature in the formation of the terminal can be equal to or lower than the curing temperature of the first thermosetting resin contained in the insulation film. Therefore, the terminal can be formed while reduction in the characteristics of the insulation film can be suppressed and occurrence of delamination and cracking of the insulation film can also be suppressed.

The thermoplastic resin may include polyethylene system resin, polypropylene system resin, acryl system resin, polystyrene system resin, vinyl chloride system resin, silicone system resin, polyamide system resin, polyimide system resin, fluorinated hydrocarbon system resin, polyether system resin, butadiene rubber, isoprene rubber, styrene-butadiene rubber (SBR), a styrene-butadiene-styrene copolymer (SBS), a styreneethylene-butadiene-styrene copolymer (SEBS), ethylene-propylene rubber, butyl rubber, chloroprene rubber, acrylonitrile-butadiene rubber, and the like, for example.

The thermosetting resin may include (i) amino system resin such as urea system resin, melamine system resin, and guanamine system resin, (ii) epoxy system resin such as bisphenol A type, bisphenol F type, phenol novolac type, and alicyclic, (iii) oxetane system resin, (iv) phenol system resin such as resol type and novolac type, (v) silicone-modified organic resin such as silicone epoxy and silicone polyester, and the like, for example.

Note that, for the terminal, a material including air holes, air bubbles, or the like containing air, for example, may be used. With such a composition structure, the flexibility (for example, the Young's modulus) can be controlled in a wide range, and thus the stress on the power generation element 1 that is generated by expansion or contraction of the layers of the power generation element 1 due to a temperature change can be further relaxed.

Additionally, the terminal may contain a non-flammable material such as metal, ceramics, or a solid electrolyte. When the non-flammable material is contained in the terminal, the operational effect as a layer wall that suppresses catching of fire when the battery heats abnormally is obtained.

Moreover, the terminal may have a lamination structure of multiple conductive layers each consisting of a conductive material. The conductive material of the multiple conductive layers may be the same or may be different from each other.

The electrode terminal 80 and the counter electrode terminal 90 may be formed of the same material or may be formed of materials different from each other. When the electrode terminal 80 and the counter electrode terminal 90 are formed of materials different from each other, the material, the physical properties, and the like of the above-described terminal may be satisfied by at least either of the electrode terminal 80 and the counter electrode terminal 90.

Additionally, the thickness of the terminal is not particularly limited. In terms of the volume energy density of the battery 100, the thickness of the terminal, particularly, the thickness of at least either of the electrode contact portion 82 and the counter electrode contact portion 92 may be thinner than the thickness of the current collector. The thickness of the terminal, particularly, the thickness of each of the electrode contact portion 82 and the counter electrode contact portion 92 is 1 µm or greater and 50 µm or smaller, and may be 2 µm or greater and 40 µm or smaller, for example. With the thickness of the terminal within the above-described range, the stress generated by expansion or contraction of the current collector due to a temperature change is likely to be relaxed while suppressing a reduction in the volume energy density, and the characteristics of the battery 100 can be drawn out stably.

According to the above configuration, the battery 100 having high reliability can be implemented.

When the configuration of the battery 100 according to the present embodiment and configurations of the batteries described in PTL 1 and PTL 2 are compared with each other, the following differences are found.

In PTL 1, an all-solid-state battery having a structure that draws out the characteristics with a tab lead by using insulants for side walls of a power generation element. However, it is a structure in which a current collector end surface is exposed between the insulants, and the current collector end surface is a surface of high activity with a few oxide coatings and the like in a case of a processed surface after common cutting processing. Thus, when the terminal is drawn out with a lead terminal like a tab lead, short-circuit is likely to be caused when the lead terminal is brought into contact. Additionally, the tab lead is likely to be a point of origin of reactant generation in repeating processes of exposure to a small amount of gas and charge and discharge. Moreover, a burr (dust) that falls out during processing of the tab lead may be attached to the current collector and cause short-circuit. Furthermore, it is a structure in which delamination is likely to occur from the exposed current collector end portion. Additionally, since the tab lead does not form an integral structure joined to the power generation element side surface, the tab lead is likely to be broken when impact and local stress are applied. Thus, the conventional configuration has a problem in the reliability of the battery. Such a problem becomes more evident along with downsizing and multi-layering of the battery.

Additionally, in PTL 2, an assembled battery in which multiple batteries are connected to each other with a tab lead is disclosed. However, the multiple batteries are connected to each other with a lead terminal like a tab lead. Additionally, it is a structure in which layers of a power generation element are exposed in a side wall of the battery. Therefore, as with PTL 1, the battery of PTL 2 is likely to be damaged, delamination of the layers is likely to occur from the exposed side wall end portion, and also short-circuit is likely to be caused. Additionally, those problems are likely to be evident in downsizing and in an increase in the number of the connected batteries.

In contrast, according to the configuration of the battery 100 including the insulation film according to the present embodiment, at least a part of the side surfaces of the electrode layer 10 and the counter electrode layer 20 of the power generation element 1 is covered with the insulation films. With this configuration, for example, exposure of the current collectors of the electrode layer 10 and the counter electrode layer 20 is reduced. Additionally, with the insulation films binding the layers of the power generation element 1 from the end portions of the power generation element 1, delamination of the layers of the power generation element 1 and falling out of a burr during processing are suppressed. Moreover, electric isolation between the two electrodes is improved by the insulation films. With such operational effects, the battery 100 having high reliability in which short-circuit between the electrode layer 10 and the counter electrode layer 20 is suppressed even with downsizing can be implemented.

Additionally, the battery 100 according to the present embodiment has the integral structure in which the terminal covers the insulation film covering the side surface of the power generation element 1 from outside. Therefore, when impact and local stress are applied to the terminal, the terminal is unlikely to be damaged, and the problems as described above are unlikely to occur. Thus, the battery 100 having high reliability can be implemented. Moreover, in PTL 1 and PTL 2, there are neither disclosure nor mention of the battery with the configuration including the insulation film and the terminal and the laminated battery in which the batteries are laminated that are described in the present embodiment.

### [Modification 1]

A Modification 1 of the Embodiment 1 is described below. Note that, in the following descriptions of the Modification 1, different points from the Embodiment 1 are mainly described, and descriptions of common points are omitted or simplified.

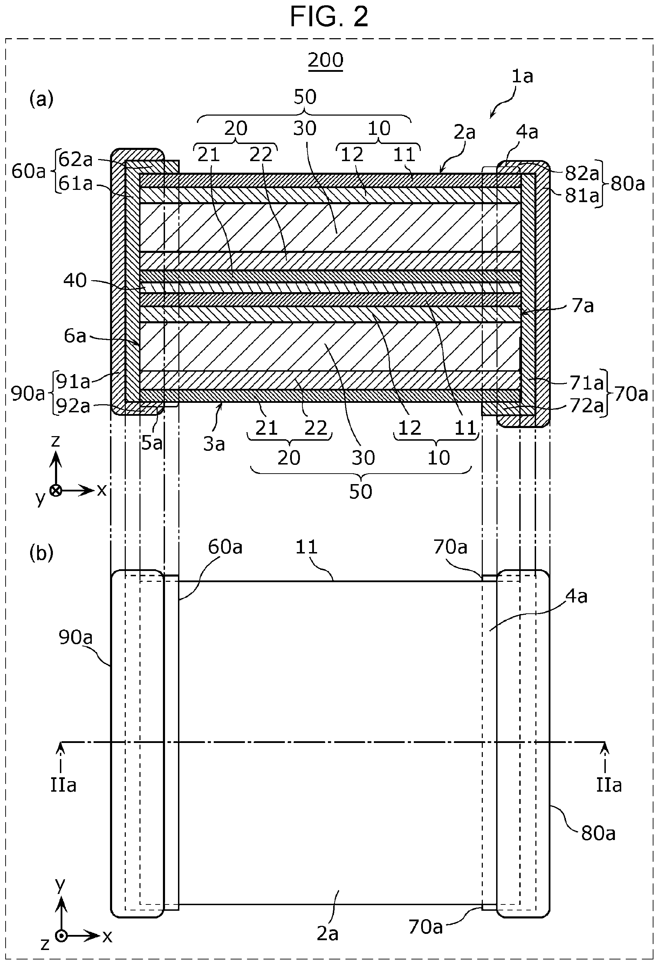

Fig. 2 is a cross-sectional view and a top view illustrating a schematic configuration of a battery according to the Modification 1 of the Embodiment 1. Specifically, Fig. 2(a) is a cross-sectional view of a battery 200 according to the present modification, and Fig. 2(b) is a plan view in which the battery 200 is viewed from the upper side in the z axis direction. In Fig. 2(a), a cross section at a position indicated by the IIa-IIa line in Fig. 2(b) is illustrated.

As illustrated in Fig. 2, the battery 200 according to the Modification 1 of the Embodiment 1 is different from the battery 100 in the Embodiment 1 mainly in that a power generation element 1a is not a single battery including the single battery cell 50 but is a battery in which multiple battery cells 50 are connected to each other in series. Instead of the power generation element 1, the electrode insulation film 60, the counter electrode insulation film 70, the electrode terminal 80, and the counter electrode terminal 90 of the battery 100, the battery 200 includes the power generation element 1a, an electrode insulation film 60a, a counter electrode insulation film 70a, an electrode terminal 80a, and a counter electrode terminal 90a.

The power generation element 1a includes the multiple battery cells 50, specifically, two battery cells 50. The number of the battery cells 50 included in the power generation element 1a is not limited to two and may be three or more. Additionally, the power generation element 1a includes a connection layer 40 having conductivity between adjacent battery cells 50 out of the multiple battery cells 50.

The power generation element 1a includes an electrode main surface 2a that is a main surface formed of the surface of the electrode layer 10 of the uppermost battery cell 50, a counter electrode main surface 3a that is a main surface formed of the surface of the counter electrode layer 20 of the lowermost battery cell 50, and side surfaces. The electrode main surface 2a includes an electrode-exposed region 4a, which is not covered with the electrode insulation film 60a and the counter electrode insulation film 70a, in a position overlapped with the later-described counter electrode main surface covering portion 72a in plan view. The counter electrode main surface 3a includes a counter electrode-exposed region 5a, which is not covered with the electrode insulation film 60a and the counter electrode insulation film 70a, in a position overlapped with a later-described electrode main surface covering portion 62a in plan view. The side surfaces include a first side surface 6a and a second side surface 7a that are two side surfaces on the sides of shorter sides of the power generation element 1a in plan view.

The multiple battery cells 50 are electrically connected to each other in series and laminated. The multiple battery cells 50 are laminated such that one electrode layer 10 and the other counter electrode layer 20 of adjacent battery cells 50 out of the multiple battery cells 50 are adjacent to each other with the solid electrolyte layer 30 not arranged therebetween but the connection layer 40. In other words, the multiple battery cells 50 are laminated such that the vertical relationship between the electrode layer 10 and the counter electrode layer 20 of each battery cell 50 is the same. In the present modification, the one electrode layer 10 (specifically, the electrode current collector 11) and the other counter electrode layer 20 (specifically, the counter electrode current collector 21) of the adjacent battery cells 50 are electrically connected to each other through the connection layer 40, and thus the multiple battery cells 50 are electrically connected to each other in series and laminated. That is, the power generation element 1a includes a bipolar electrode in which the electrode layer 10 and the counter electrode layer 20 are connected to each other without the solid electrolyte layer 30.

Note that, the power generation element 1a may not include the connection layer 40, and the one electrode layer 10 and the other counter electrode layer 20 of the adjacent battery cells 50 out of the multiple battery cells 50 may be laminated so as to be adjacent to each other without the connection layer 40. For example, the multiple battery cells 50 may be electrically connected to each other in series and laminated with the one electrode layer 10 and the other counter electrode layer 20 of the adjacent battery cells 50 electrically connected to each other with direct connection.

The connection layer 40 is formed of a conductive material having electronic conductivity, for example. The conductive material forming the connection layer 40 is not particularly limited; however, as the conductive material, the conductive material that is exemplified as the conductive material forming the above-described terminal can be used.

The electrode insulation film 60a and the counter electrode insulation film 70a respectively cover the first side surface 6a and the second side surface 7a that are the two side surfaces on the sides of shorter sides of the power generation element 1a in plan view. The electrode terminal 80a and the counter electrode terminal 90a are in contact with the electrode insulation film 60a and the counter electrode insulation film 70a, respectively. The electrode terminal 80a and the counter electrode terminal 90a are arranged facing each other.

The electrode insulation film 60a includes a first side surface covering portion 61a that covers a part of the side surface of the power generation element 1a and the electrode main surface covering portion 62a that covers the electrode main surface 2a. In the present embodiment, the electrode insulation film 60a does not cover the counter electrode main surface 3a. The electrode insulation film 60a may cover a part of the counter electrode main surface 3a.

The first side surface covering portion 61a continuously covers from an end on an electrode main surface 2a side of the first side surface 6a to an end on a counter electrode main surface 3a side, for example. That is, the first side surface covering portion 61a continuously covers the side surfaces of the multiple battery cells 50 and the connection layer 40 in the power generation element 1a.

The counter electrode insulation film 70a includes a second side surface covering portion 71a that covers another part of the side surface of the power generation element 1a and a counter electrode main surface covering portion 72a that covers the counter electrode main surface 3a. In the present embodiment, the counter electrode insulation film 70a does not cover the electrode main surface 2a. The counter electrode insulation film 70a may cover a part of the electrode main surface 2a.

The second side surface covering portion 71a continuously covers an end on an electrode main surface 2a side of the second side surface 7a to an end on a counter electrode main surface 3a side, for example. That is, the second side surface covering portion 71a continuously covers the side surfaces of the multiple battery cells 50 and the connection layer 40 in the power generation element 1a.

The electrode terminal 80a is a member in the form of film that covers the counter electrode insulation film 70a from outside and is electrically connected to the electrode layer 10 positioned uppermost in the power generation element 1a. In detail, the electrode terminal 80a is routed around from a surface on an outer side of the counter electrode insulation film 70a to the electrode main surface 2a formed of the main surface of the electrode current collector 11 positioned uppermost in the power generation element 1a and continuously covers the counter electrode insulation film 70a and at least a part of the electrode main surface 2a. The electrode terminal 80a includes a counter electrode insulation film covering portion 81a that covers the counter electrode insulation film 70a and an electrode contact portion 82a that is in contact with the electrode main surface 2a.

The counter electrode terminal 90a is a member in the form of film that covers the electrode insulation film 60a from outside and is electrically connected to the counter electrode layer 20 positioned lowermost in the power generation element 1a. In detail, the counter electrode terminal 90a is routed around from a surface on an outer side of the electrode insulation film 60a to the counter electrode main surface 3a formed of the main surface of the counter electrode current collector 21 positioned lowermost in the power generation element 1a and continuously covers the electrode insulation film 60a and at least a part of the counter electrode main surface 3a. The counter electrode terminal 90a includes an electrode insulation film covering portion 91a that covers the electrode insulation film 60a and a counter electrode contact portion 92a that is in contact with the counter electrode main surface 3a.

With such a structure in which the insulation film, the terminal, and the power generation element 1a in which the multiple battery cells 50 are electrically connected to each other in series are integral to each other, a high voltage can be obtained, and also short-circuit and delamination of the layers of the power generation element 1a can be suppressed. Therefore, the battery 200 with high energy and high reliability can be implemented.

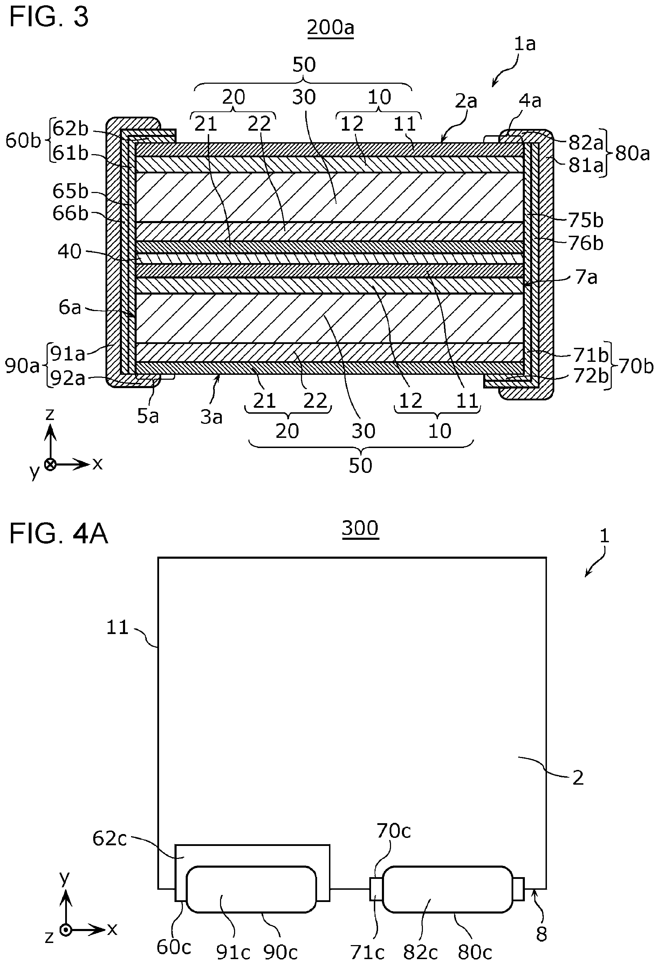

Note that, in the battery 200, the insulation film may have a lamination structure of multiple insulation layers. Fig. 3 is a cross-sectional view illustrating a schematic configuration of another battery according to the Modification 1 of the Embodiment 1. As illustrated in Fig. 3, instead of the electrode insulation film 60a and the counter electrode insulation film 70a of the battery 200, a battery 200a includes an electrode insulation film 60b and a counter electrode insulation film 70b having a lamination structure of multiple insulation layers.

The electrode insulation film 60b includes a first side surface covering portion 61b that covers a part of the side surface of the power generation element 1a and an electrode main surface covering portion 62b that covers the electrode main surface 2a. Additionally, the electrode insulation film 60b has a lamination structure of multiple insulation layers 65b and 66b. In Fig. 3, the lamination structure of the multiple insulation layers 65b and 66b is provided over the entire region of the electrode insulation film 60b; however, the lamination structure of the multiple insulation layers 65b and 66b may be provided in a part of the electrode insulation film 60b. For example, only either of the first side surface covering portion 61b and the electrode main surface covering portion 62b may have the lamination structure of the multiple insulation layers 65b and 66b.

The counter electrode insulation film 70b includes a second side surface covering portion 71b that covers the second side surface 7a and a counter electrode main surface covering portion 72b that covers the counter electrode main surface 3a. Additionally, the counter electrode insulation film 70b has a lamination structure of multiple insulation layers 75b and 76b. In Fig. 3, the lamination structure of the multiple insulation layers 75b and 76b is provided over the entire region of the counter electrode insulation film 70b; however, the lamination structure of the multiple insulation layers 75b and 76b may be provided in a part of the counter electrode insulation film 70b. For example, only either of the second side surface covering portion 71b and the counter electrode main surface covering portion 72b may have the lamination structure of the multiple insulation layers 75b and 76b.

Hereinafter, the multiple insulation layers 65b and 66b and the multiple insulation layers 75b and 76b may be simply referred to as an "insulation layer", collectively.

The numbers of the insulation layers included in the electrode insulation film 60b and the counter electrode insulation film 70b are two, respectively, in the example illustrated in Fig. 3; however, the numbers may be three or more, respectively. Note that, either of the electrode insulation film 60b and the counter electrode insulation film 70b may not have the lamination structure of multiple insulation layers.

The thickness of each of the multiple insulation layers is 30 µm or smaller, for example. In terms of forming finer electrode insulation film 60b and counter electrode insulation film 70b, the thickness of each of the multiple insulation layers may be 10 µm or smaller.

The electrode insulation film 60b and the counter electrode insulation film 70b are formed by applying and curing resin with insulation properties such as epoxy system resin multiple times. For example, with further application and curing of the epoxy system resin onto the epoxy system resin that is cured once, a fine and firm insulation film in which a defect such as a hole and a thin portion due to uneven thickness is unlikely to occur can be formed. With the terminal formed on such an insulation film in which the defect is reduced, a problem that the conductive material enters the insulation film and causes short-circuit is suppressed. Additionally, if a thick insulation film is formed by applying and curing the resin with insulation properties at one time, there is a possibility that delamination occurs due to stress during the curing. Particularly, when there are a bend portion between the first side surface covering portion 61b and the electrode main surface covering portion 62b and a bend portion between the second side surface covering portion 71b and the counter electrode main surface covering portion 72b, contraction stress during the curing of resin acts on an end portion on the opposite side of the bend portion, and delamination in the form in which the end portion is peeled outward is likely to be caused. To deal with this, with the laminating by applying and curing a thin insulation film multiple times repeatedly, strong curing stress is unlikely to act even when the insulation film is formed thick in 100 µm, for example, and thus delamination is suppressed. With this, the insulation film with the lamination structure of multiple insulation layers can be formed while suppressing crack and delamination. As a matter of course, it is possible to achieve the formation also with an insulation film with a thickness of 1 mm. With common observation of a polished cross section by an optical microscope, an SEM (Scanning Electron Microscope), or the like, such a lamination structure of multiple insulation layers can be observed as a lamination structure that can be seen by repeating multiple times of applying and curing.

Each of the insulation layers forming the multiple insulation layers may be formed of the same material or may be formed of different materials. That is, when the insulation layer is formed multiple times, different insulation materials may be used for each layer. For example, the insulation layers are laminated by repeating applying and curing so as to be in the order from high to low curing temperature, melting point, or glass transition point of the resin with insulation properties, and thus a fine and thick insulation film can be formed without deteriorating the properties of the previously formed insulation layer by heat during the curing. In this case, the insulation layer positioned on the outer side contains resin with higher curing temperature, melting point, or glass transition point. Note that, a temperature and time for the conditions of thermal curing may be set within a range that does not negatively affect the battery characteristics.

### [Modification 2]

Next, a Modification 2 of the Embodiment 1 is described. Note that, in the following descriptions of the Modification 2, different points from the Embodiment 1 are mainly described, and descriptions of common points are omitted or simplified.

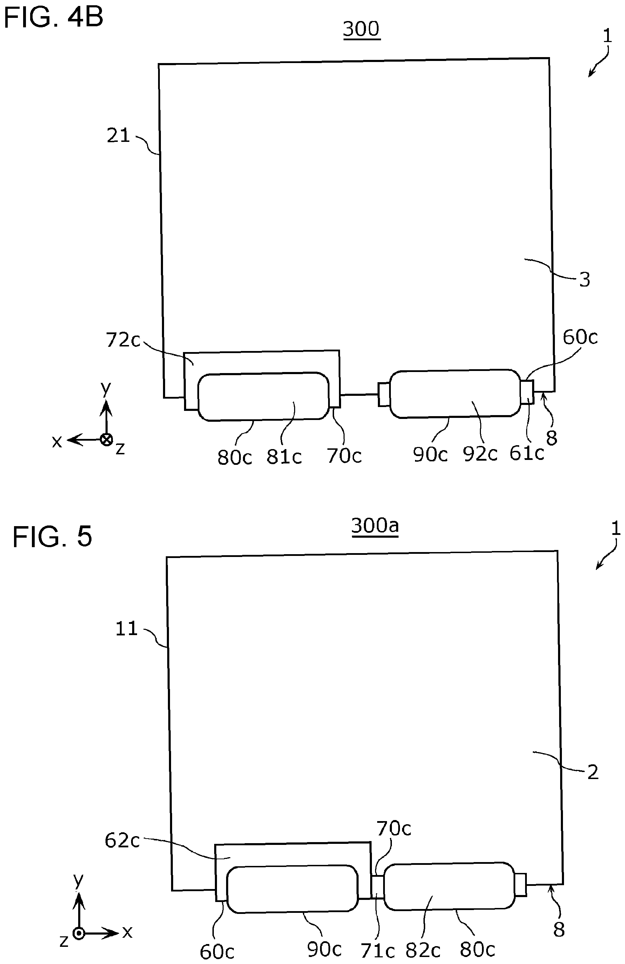

Fig. 4A is a top view illustrating a schematic configuration of a battery according to the Modification 2 of the Embodiment 1. Fig. 4B is a bottom view illustrating a schematic configuration of the battery according to the Modification 2 of the Embodiment 1. Fig. 4A is a plan view in a case where a battery 300 according to the present modification is viewed from the upper side in the z axis direction, and Fig. 4B is a plan view in a case where the battery 300 is viewed from a lower side in the z axis direction.

As illustrated in Fig. 4A and Fig. 4B, the battery 300 according to the Modification 2 of the Embodiment 1 is different from the battery 100 in the Embodiment 1 mainly in that the insulation film and the terminal cover one surface out of the side surfaces of the power generation element 1 on the side of longer side in plan view. Instead of the electrode insulation film 60, the counter electrode insulation film 70, the electrode terminal 80, and the counter electrode terminal 90 of the battery 100, the battery 300 includes an electrode insulation film 60c, a counter electrode insulation film 70c, an electrode terminal 80c, and a counter electrode terminal 90c.

The electrode insulation film 60c includes a first side surface covering portion 61c that covers a part of the side surface of the power generation element 1 and an electrode main surface covering portion 62c that covers the electrode main surface 2. The counter electrode insulation film 70c includes a second side surface covering portion 71c that covers another part of the side surface of the power generation element 1 and a counter electrode main surface covering portion 72c that covers the counter electrode main surface 3.

Both the first side surface covering portion 61c and second side surface covering portion 71c cover a third side surface 8 that is a surface out of the side surfaces of the power generation element 1 on the side of longer side in plan view. The first side surface covering portion 61c and the second side surface covering portion 71c are in contact with the third side surface 8 and joined to the third side surface 8, for example. Additionally, the electrode insulation film 60c and the counter electrode insulation film 70c are away from each other.

The first side surface covering portion 61c is routed around also onto the counter electrode main surface 3 and covers a part of the counter electrode main surface 3. Additionally, the second side surface covering portion 71c is routed around also onto the electrode main surface 2 and covers a part of the electrode main surface 2. Thus, with the first side surface covering portion 61c and the second side surface covering portion 71c routed around the main surface of the power generation element 1, the power generation element 1 can be sandwiched from the main surfaces on the two sides by the insulation films, and delamination of the layers of the power generation element 1 and falling out of a burr during processing can be further suppressed.

The electrode terminal 80c includes a counter electrode insulation film covering portion 81c that covers the counter electrode insulation film 70c and an electrode contact portion 82c that is in contact with the electrode main surface 2. The counter electrode terminal 90c includes an electrode insulation film covering portion 91c that covers the electrode insulation film 60c and a counter electrode contact portion 92c that is in contact with the counter electrode main surface 3. Both the electrode terminal 80c and counter electrode terminal 90c cover the third side surface 8 by way of the insulation films.

In plan view, the electrode contact portion 82c of the electrode terminal 80c is in contact with the electrode main surface 2 on an inner side of an end portion on an inner side of the second side surface covering portion 71c routed around the electrode main surface 2. Additionally, in plan view, the counter electrode contact portion 92c of the counter electrode terminal 90c is in contact with the counter electrode main surface 3 on an inner side of an end portion on an inner side of the first side surface covering portion 61c routed around the electrode main surface 2.

As described above, with a configuration in which the electrode insulation film 60c and the counter electrode insulation film 70c covered with the terminals cover the same third side surface 8, the battery 300 corresponding to a small installation mode in which a current is drawn out from only one of the longer sides of the power generation element 1 in plan view can be implemented.

Note that, in the battery 300, the electrode insulation film 60c and the counter electrode insulation film 70c are away from each other; however, it is not limited thereto. The electrode insulation film 60c and the counter electrode insulation film 70c may be in contact with each other. Fig. 5 is a top view illustrating a schematic configuration of another battery according to the Modification 2 of the Embodiment 1. As illustrated in Fig. 5, in a battery 300a, the electrode insulation film 60c and the counter electrode insulation film 70c are in contact with each other between the electrode terminal 80c and the counter electrode terminal 90c in plan view. With this, the insulation properties between the electrode terminal 80c and the counter electrode terminal 90c are improved, and short-circuit between the two terminals and between the terminals and the power generation element 1 can be suppressed.

### [Modification 3]

Next, a Modification 3 of the Embodiment 1 is described. Note that, in the following descriptions of the Modification 3, different points from the Embodiment 1 are mainly described, and descriptions of common points are omitted or simplified.

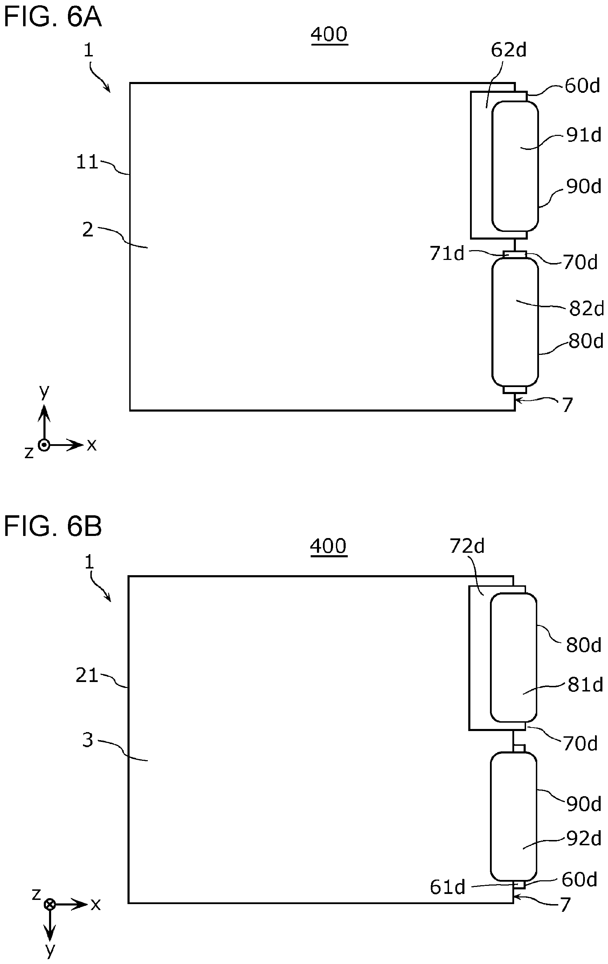

Fig. 6A is a top view illustrating a schematic configuration of a battery according to the Modification 3 of the Embodiment 1. Fig. 6B is a bottom view illustrating a schematic configuration of the battery according to the Modification 3 of the Embodiment 1. Fig. 6A is a plan view in a case where a battery 400 according to the present modification is viewed from the upper side in the z axis direction, and Fig. 6B is a plan view in a case where the battery 400 is viewed from the lower side in the z axis direction.

As illustrated in Fig. 6A and Fig. 6B, the battery 400 according to the Modification 3 of the Embodiment 1 is different from the battery 100 in the Embodiment 1 mainly in that the insulation film and the terminal cover one surface out of the side surfaces of the power generation element 1 on the side of shorter side in plan view. Instead of the electrode insulation film 60, the counter electrode insulation film 70, the electrode terminal 80, and the counter electrode terminal 90 of the battery 100, the battery 400 includes an electrode insulation film 60d, a counter electrode insulation film 70d, an electrode terminal 80d, and a counter electrode terminal 90d.

The electrode insulation film 60d includes a first side surface covering portion 61d that covers a part of the side surface of the power generation element 1 and an electrode main surface covering portion 62d that covers the electrode main surface 2. The counter electrode insulation film 70d includes a second side surface covering portion 71d that covers another part of the side surface of the power generation element 1 and a counter electrode main surface covering portion 72d that covers the counter electrode main surface 3.

Both the first side surface covering portion 61d and second side surface covering portion 71d cover the second side surface 7 that is a surface out of the side surfaces of the power generation element 1 on the side of shorter side in plan view. The first side surface covering portion 61d and the second side surface covering portion 71d are in contact with the second side surface 7 and joined to the second side surface 7, for example. Additionally, the electrode insulation film 60d and the counter electrode insulation film 70d are away from each other.

The electrode terminal 80d includes a counter electrode insulation film covering portion 81d that covers the counter electrode insulation film 70d and an electrode contact portion 82d that is in contact with the electrode main surface 2. The counter electrode terminal 90d includes an electrode insulation film covering portion 91d that covers the electrode insulation film 60d and a counter electrode contact portion 92d that is in contact with the counter electrode main surface 3. Both the electrode terminal 80d and counter electrode terminal 90d cover the second side surface 7 by way of the insulation films.

As described above, with a configuration in which the electrode insulation film 60d and the counter electrode insulation film 70d covered with the terminals cover the same second side surface 7, the battery 400 corresponding to a small installation mode in which a current is drawn out from only one of the shorter sides of the power generation element 1 in plan view can be implemented.

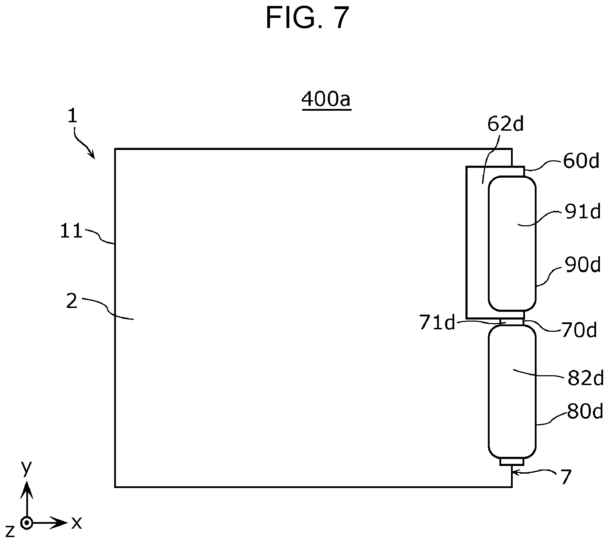

Note that, in the battery 400, the electrode insulation film 60d and the counter electrode insulation film 70d are away from each other; however, it is not limited thereto. The electrode insulation film 60d and the counter electrode insulation film 70d may be in contact with each other. Fig. 7 is a top view illustrating a schematic configuration of another battery according to the Modification 3 of the Embodiment 1. As illustrated in Fig. 7, in a battery 400a, the electrode insulation film 60d and the counter electrode insulation film 70d are in contact with each other between the electrode terminal 80d and the counter electrode terminal 90d in plan view. With this, the insulation properties between the electrode terminal 80d and the counter electrode terminal 90d are improved, and short-circuit between the two terminals and between the terminals and the power generation element 1 can be suppressed.

### [Manufacturing Method of Battery]

Next, an example of a manufacturing method of the battery according to the present embodiment is described. A manufacturing method of the battery 200a described in the Modification 1 of the above-described Embodiment 1 is described below. Additionally, in the following descriptions of the manufacturing method, a case where the electrode layer 10 is a positive electrode layer including a positive electrode active material layer and a positive electrode current collector as the electrode active material layer 12 and the electrode current collector 11 and the counter electrode layer 20 is a negative electrode layer including a negative electrode active material layer and a negative electrode current collector as the counter electrode active material layer 22 and the counter electrode current collector 21 is described.

First, each paste used for printing and formation of the positive electrode active material layer and the negative electrode active material layer is produced. As a solid electrolyte raw material used for a compound agent of each of the positive electrode active material layer and the negative electrode active material layer, for example, glass powder of Li₂S-P₂S₅ system sulfide in which an average particle diameter is about 10 µm and a triclinic system crystal is the main component is prepared. As this glass powder, for example, glass powder having high ion conductivity of about 2 to 3 × 10⁻³S/cm can be used. As the positive electrode active material, for example, powder of Li, Ni, Co, Al composite oxide (LiNi_{0.8}Co_{0.15}Al_{0.05}O₂) in a layer form structure in which an average particle diameter is about 5 µm is used. Paste for the positive electrode active material layer in which a compound agent containing the above-described positive electrode active material and the above-described glass powder is dispersed into an organic solvent or the like is produced. Additionally, as the negative electrode active material, for example, powder of natural graphite in which an average particle diameter is about 10 µm is used. Paste for the negative electrode active material layer in which a compound agent containing the above-described negative electrode active material and the above-described glass powder is dispersed into an organic solvent or the like is produced similarly.

Next, as a material used as the positive electrode current collector and the negative electrode current collector, for example, copper foil of a thickness of about 30 µm is prepared. With a screen printing method, the paste for the positive electrode active material layer and the paste for the negative electrode active material layer are each printed in a predetermined shape and a thickness of 50 µm or greater and 100 µm or smaller on one surface of each copper foil. The paste for the positive electrode active material layer and the paste for the negative electrode active material layer are, for example, dried at 80°C or higher and 130°C or lower and have a thickness of 30 µm or greater and 60 µm or smaller. With this, the current collectors (copper foil) on which the positive electrode active material layer and the negative electrode active material layer are formed respectively, that is, the positive electrode layer and the negative electrode layer (that is, the electrode layer 10 and the counter electrode layer 20) are obtained.

Next, paste for the solid electrolyte layer in which a compound agent containing the above-described glass powder is dispersed into an organic solvent or the like is produced. The above-described paste for the solid electrolyte layer is printed in a thickness of about 100 µm, for example, on a surface of an active material layer of each of the positive electrode layer and the negative electrode layer by using a metal mask. Thereafter, the positive electrode layer and the negative electrode layer on which the paste for the solid electrolyte layer is printed is dried at 80°C or higher and 130°C or lower.

Next, the solid electrolyte printed on the positive electrode active material layer of the positive electrode layer and the solid electrolyte printed on the negative electrode active material layer of the negative electrode layer are laminated facing each other in contact with each other.

Next, the laminated lamination body is pressurized by a pressurization mold. Specifically, an elastic body sheet of, for example, a thickness of 70 µm and elasticity of about 5 × 10⁶ Pa is inserted between the lamination body and the pressurization mold plate, that is, on a current collector upper surface. With this configuration, pressure is applied to the lamination body through by way of the elastic body sheet. Thereafter, for example, the pressurization mold is pressurized for 90 seconds while being warmed to 50°C at pressure of 300 MPa. With this, the battery cell 50 is obtained. The battery cells 50 produced in this way are prepared as many as that to be included in the power generation element 1a.

Next, as the connection layer 40, for example, thermosetting conductive paste containing silver particles of an average particle diameter of 0.5 µm is applied in a thickness of about 5 µm by screen printing on one current collector of the positive electrode layer and the negative electrode layer of the battery cell 50. Then, the battery cell 50 and another battery cell 50 are laminated to be connected to each other in series with the applied conductive paste arranged therebetween. That is, the battery cell 50 and the other battery cell 50 are laminated such that a current collector that is a counter electrode of the current collector on which the conductive paste is applied is arranged on the applied conductive paste, and the battery cell 50 and the other battery cell 50 are fixed by applying pressure. In order to increase the number of series connection, this process is repeated by the number of the battery cells to be multilayered. Thereafter, the battery cell 50 and the other battery cell 50 are subjected to thermal curing processing at 100°C or higher and 130°C or lower for 40 minutes or more and 100 minutes or less while being held so as not to be moved in a state where pressure of, for example, about 1 kg/cm² is applied, and cooled to a room temperature. With this, the power generation element 1a is obtained.

Next, as a material of the first side surface covering portion 61b and the second side surface covering portion 71b, thermosetting epoxy system resin is applied in a thickness of about 20 µm or greater and 40 µm or smaller by screen printing on the first side surface 6a and the second side surface 7a, which are the two side surfaces on the sides of shorter sides of the power generation element 1a produced as described above in plan view. In this process, the thermosetting epoxy system resin is applied on also a portion that is routed around a part of the side surface on the side of longer side of the power generation element 1a, concurrently. Thereafter, the applied thermosetting epoxy system resin is cured at 120°C or higher and 150°C or lower for 1 hour or more and 3 hours or less. Next, as a material of the electrode main surface covering portion 62b and the counter electrode main surface covering portion 72b, thermosetting epoxy system resin is applied in a thickness of 10 µm or greater and 40 µm or smaller by screen printing on a part of the electrode main surface 2a and the counter electrode main surface 3a. Thereafter, the applied thermosetting epoxy system resin is cured at 120°C or higher and 150°C or lower for 1 hour and more and 3 hours or less. Those applying and curing are repeated by the number of the insulation layers, and the insulation films of 20 µm or greater and 120 µm or smaller are laminated and formed, for example.

Next, for example, thermosetting conductive paste containing silver particles of an average particle diameter of 0.5 µm is patterned and formed in a thickness of about 30 µm by screen printing on a part of the electrode main surface 2 and the counter electrode main surface 3. Next, thermosetting conductive paste containing silver particles is printed and applied on a surface of the insulation film. Then, the terminal is formed by curing the power generation element 1a on which the conductive paste is applied at a temperature equal to or lower than the curing temperature during the formation of the insulation film that is 100°C or higher and 130°C or lower, for example, for 0.5 hours or more and 3 hours or less. If needed, the terminal may also be formed to be laminated as with the insulation film such that the terminal has a desired thickness.

In this way, the battery 200a is obtained. Note that, for the connection layer 40 and the terminal, the same conductive paste may be used, or different conductive paste with different curing temperatures or conductive particles may be used. For example, when it is desired to form an applied film of a thin layer, the conductive particles such as silver particles may be finer particles, or scale-like particles may be used as the conductive particles. Additionally, for the purpose of forming an alloy of the connection layer 40 or the terminal and the current collector with heat during the curing, a material containing metal of a low melting point may be used for the connection layer 40 or the terminal.

Note that, the manufacturing method of the battery and the order of steps described are not limited to the above-described example. For example, the battery 200a may be manufactured by forming the insulation film and the terminal on each of the multiple battery cells 50 and thereafter laminating the multiple battery cells on which the insulation film and the terminal are formed.

Additionally, in the above-described manufacturing method, an example in which the paste for the positive electrode active material layer, the paste for the negative electrode active material layer, the paste for the solid electrolyte layer, and the conductive paste are applied by printing is indicated; however, it is not limited thereto. As the printing method, for example, a doctor blade method, a calendar method, a spin coating method, a dip coating method, an inkjet method, an offset method, a die coating method, a spray method, or the like may be used.

Moreover, the pair of the first side surface covering portion 61b and the electrode main surface covering portion 62b and the pair of the second side surface covering portion 71b and the counter electrode main surface covering portion 72b may be each formed by applying thermosetting epoxy system resin or the like all at once.

Furthermore, the insulation film may be formed by immersing the side surface of the power generation element 1a into thermosetting resin in the form of liquid to cover the side surface of the power generation element 1a with the thermosetting resin in the form of liquid and thermal curing.

In the above-described manufacturing method, the thermosetting conductive paste containing silver metal particles is indicated as an example of the conductive paste; however, it is not limited thereto. As the conductive paste, thermosetting conductive paste containing highly conductive metal particles of a high melting point (for example, 400°C or higher), metal particles of a low melting point (preferably, equal to or lower than the curing temperature of the conductive paste and, for example, 300°C or lower), and resin may be used. A material of the highly conductive metal particles of a high melting point may include silver, copper, nickel, zinc, aluminum, palladium, gold, platinum, or an alloy of a combination of those metals, for example. A material of the metal particles of a low melting point in which the melting point is 300°C or lower may include tin, a tin-zinc alloy, a tin-silver alloy, a tin-copper alloy, a tin-aluminum alloy, a tin-lead alloy, indium, an indium-silver alloy, an indium-zinc alloy, an indium-tin alloy, bismuth, a bismuth-silver alloy, a bismuth-nickel alloy, a bismuth-tin alloy, a bismuth-zinc alloy, a bismuth-lead alloy, or the like, for example. With a use of the conductive paste containing such metal particles of a low melting point, even at a curing temperature lower than the melting point of the highly conductive metal particles of the high melting point, solid-phase and liquid-phase reaction proceeds in a portion in which the metal particles in the conductive paste and the metal forming the current collector are put in contact with each other. Thus, in an interface between the conductive paste and the surface of the current collector, a diffusion region that is alloyed by the solid-phase and liquid-phase reaction is formed around the above-described contact portion. When silver or a silver alloy is used for the conductive metal particles and copper is used for the current collector, an example of the alloy to be formed may include a silver-copper system alloy of a highly conductive alloy. Additionally, with the combination of the conductive metal particles and the current collector, a silver-nickel alloy, a silver-palladium alloy, or the like may also be formed. With this configuration, the conductive paste and the current collector are joined to each other more firmly, and, for example, the operational effect is obtained that delamination of the joining portion between the conductive paste and the current collector caused by the cooling/heating cycle or impact is suppressed.

Note that, the shape of the highly conductive metal particles of a high melting point and the metal particles of a low melting point may be any shape such as a spherical shape, a scale shape, or a needle shape. Additionally, particle sizes of the highly conductive metal particles of a high melting point and the metal particles of a low melting point are not particularly limited. For example, with a smaller particle size, alloying reaction and diffusion proceed at a lower temperature; for this reason, the particle size and shape are selected arbitrarily taking into consideration an effect of heat history on the process design and the battery characteristics.

Moreover, the resin used for the thermosetting conductive paste may be anything as long as it functions as a binder for binding, and additionally, resin with appropriate printing performance, applying performance, and the like depending on the employed manufacturing process is selected. The resin used for the thermosetting conductive paste contains thermosetting resin, for example. The thermosetting resin may include the thermosetting resin that is exemplified as the material of the above-described terminal, for example. For the thermosetting resin, only one type of those materials may be used, or a combination of two or more types of those materials may be used.

Furthermore, the batteries 100, 200, 300, 300a, 400, and 400a can also be formed by applying a method similar to that described above in accordance with the shape and the number of constituents of each battery.

### (Embodiment 2)

Next, an Embodiment 2 is described. In the Embodiment 2, a laminated battery in which the batteries according to the present disclosure are laminated is described. Note that, in the following descriptions of the Embodiment 2, different points from the Embodiment 1 and the Modifications of the Embodiment 1 are mainly described, and descriptions of common points are omitted or simplified.

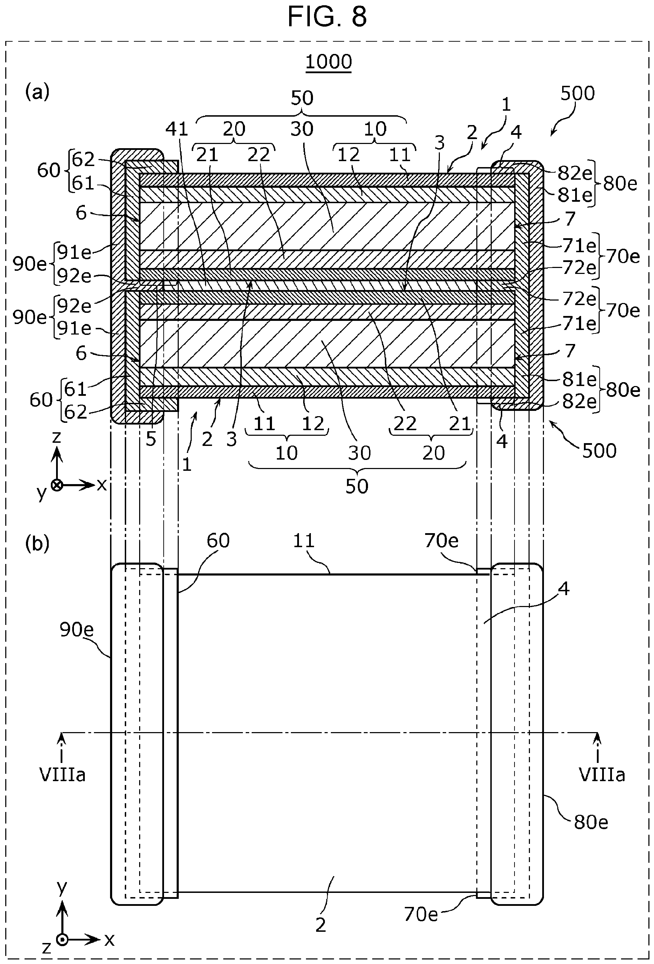

Fig. 8 is a cross-sectional view and a top view illustrating a schematic configuration of a laminated battery according to the Embodiment 2. Specifically, Fig. 8(a) is a cross-sectional view of a laminated battery 1000 according to the present embodiment, and Fig. 8(b) is a plan view in which the laminated battery 1000 is viewed from the upper side in the z axis direction. In Fig. 8(a), a cross section at a position indicated by the Villa-Villa line in Fig. 8(b) is illustrated.

As illustrated in Fig. 8, the laminated battery 1000 according to the Embodiment 2 includes multiple batteries 500 including the power generation element 1 similar to that of the battery 100 in the Embodiment 1. The number of the batteries 500 included in the laminated battery 1000 is two in the example illustrated in Fig. 8; however, the number may be three or more. Additionally, the laminated battery 1000 includes a connection layer 41 between adjacent batteries 500 out of the multiple batteries 500. Note that, the laminated battery 1000 may not include the connection layer 41. In this case, for example, a clearance may be formed between the adjacent batteries 500.

The multiple batteries 500 each include the power generation element 1, the electrode insulation film 60, a counter electrode insulation film 70e, an electrode terminal 80e, and a counter electrode terminal 90e. The multiple batteries 500 are electrically connected to each other in parallel and laminated. Specifically, electrical connection while being in contact with each other between the electrode terminals 80e and between the counter electrode terminals 90e of the multiple batteries 500 is made, and thus the multiple batteries 500 are electrically connected to each other in parallel.

Additionally, the multiple batteries 500 are laminated such that the pair of the counter electrode main surfaces 3 of the adjacent batteries 500 out of the multiple batteries 500 are adjacent to each other with the power generation element 1 not arranged therebetween but the connection layer 41. In other words, the adjacent batteries 500 are laminated such that the vertical relationship between the electrode main surface 2 and the counter electrode main surface 3 of each battery 500 is upside down. The multiple batteries 500 may be laminated such that the pair of the counter electrode main surfaces 3 of the adjacent batteries 500 out of the multiple batteries 500 are adjacent to each other with the connection layer 41 arranged therebetween.

The connection layer 41 is formed of a conductive material having electronic conductivity, for example. With this, homopolar current collectors are electrically connected to each other, and thus a current is easily extracted from the power generation element 1. The conductive material forming the connection layer 41 is not particularly limited; however, as the conductive material, the conductive material exemplified in the descriptions of the above-described terminal can be used. Note that, the connection layer 41 may be an electric insulation body. The connection layer 41 may be formed of the resin or the like exemplified in the descriptions of the above-described insulation film, for example.

The counter electrode insulation film 70e includes a second side surface covering portion 71e that covers the second side surface 7 and a counter electrode main surface covering portion 72e that covers the counter electrode main surface 3. The counter electrode main surface covering portion 72e is positioned between the adjacent batteries 500. The two counter electrode insulation films 70e respectively included in the adjacent batteries 500 are continuous and connected to each other. With this, the adjacent batteries 500 are covered with the connected insulation films, and thus the lamination structure of the laminated battery 1000 can be stabilized. Note that, when the lamination is made such that the pair of the electrode main surfaces 2 of the adjacent batteries 500 are adjacent to each other, the two electrode insulation films 60 respectively included in the adjacent batteries 500 may be connected to each other.

The electrode terminal 80e includes a counter electrode insulation film covering portion 81e that covers the counter electrode insulation film 70e and an electrode contact portion 82e that is in contact with the electrode main surface 2. The two electrode terminals 80e respectively included in the adjacent batteries 500 are continuous and connected to each other.

The counter electrode terminal 90e includes an electrode insulation film covering portion 91e that covers the electrode insulation film 60 and a counter electrode contact portion 92e that is in contact with the counter electrode main surface 3. The two counter electrode terminals 90e respectively included in the adjacent batteries 500 are continuous and connected to each other. The counter electrode contact portion 92e is positioned between the adjacent batteries 500.

With such electrode terminal 80e and counter electrode terminal 90e, the adjacent batteries 500 are covered with the connected terminals and electrically connected to each other, and thus the lamination structure of the laminated battery 1000 and extraction of a current can be stabilized.

The laminated battery 1000 can be manufactured by, for example, a method similar to the manufacturing method of the above-described battery 200a in which the multiple power generation elements 1 formed of the battery cell 50 are produced, the multiple power generation elements 1 are laminated so as to be connected to each other in parallel, and the insulation film and the terminal are formed in each of the multiple power generation element 1 all at once. Additionally, the laminated battery 1000 may be manufactured by forming the insulation film and the terminal individually in each of the multiple power generation elements 1 to form the multiple batteries 500 and then laminating the multiple batteries 500.

As such a laminated battery 1000 in which the multiple same batteries 500 are connected to each other in parallel can be formed, production control and mass productivity are excellent. With a structure in which the connection of the batteries 500 is integral by such insulation film and terminal, the laminated battery 1000 with high reliability and large capacity can be implemented.

### [Modification 1]

A Modification 1 of the Embodiment 2 is described below. Note that, in the following descriptions of the Modification 1, different points from the Embodiment 1, the Modifications of the Embodiment 1, and the Embodiment 2 are mainly described, and descriptions of common points are omitted or simplified.

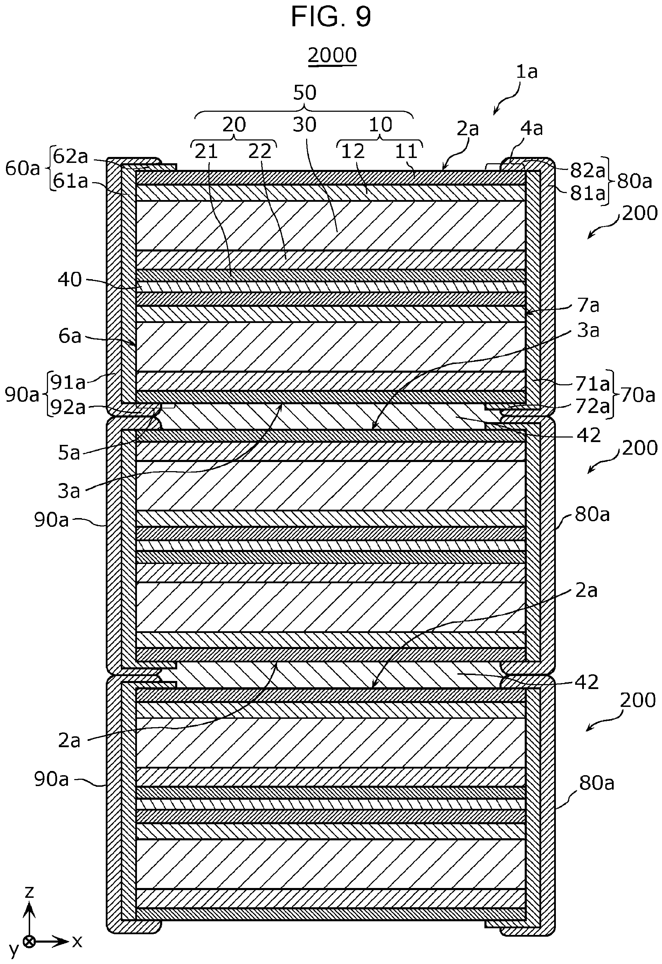

Fig. 9 is a cross-sectional view illustrating a schematic configuration of a laminated battery according to the Modification 1 of the Embodiment 2. As illustrated in Fig. 9, a laminated battery 2000 according to the Modification 1 of the Embodiment 2 includes the multiple batteries 200 according to the Modification 1 of the Embodiment 1. Note that, in the battery 200 included in the laminated battery 2000, thicknesses of a part of the electrode insulation film 60a, the counter electrode insulation film 70a, the electrode terminal 80a, and the counter electrode terminal 90a are adjusted from the battery 200 illustrated in Fig. 2 such that the thickness of the laminated battery 2000 is uniform after laminating. Note that, the thicknesses may not be adjusted.

The number of the batteries 200 included in the laminated battery 2000 is three in the example illustrated in Fig. 9; however, the number may be two or may be four or more. Additionally, the laminated battery 2000 may include a connection layer 42 between adjacent batteries 200 out of the multiple batteries 200. Note that, the laminated battery 2000 may not include the connection layer 42. In this case, for example, a clearance may be formed between the adjacent batteries 200.

The multiple batteries 200 are electrically connected to each other in parallel and laminated. Specifically, the pair of the electrode terminals 80a and the pair of the counter electrode terminals 90a of the adjacent batteries 200 out of the multiple batteries 200 are electrically connected and in contact with each other, and thus the multiple batteries 200 are electrically connected to each other in parallel. In the battery 200, the counter electrode insulation film covering portion 81a of the electrode terminal 80a covers the counter electrode main surface covering portion 72a and the electrode insulation film covering portion 91a of the counter electrode terminal 90a covers the electrode main surface covering portion 62a; thus, the top and bottom of the end portions of the power generation element 1a are also covered with the terminals. Therefore, only with the laminating of the multiple batteries 200, the pair of the electrode terminals 80a and the pair of the counter electrode terminals 90a of the adjacent batteries 200 are in contact with each other, and thus the multiple batteries 200 can be electrically connected to each other in parallel easily.

Additionally, the multiple batteries 200 are laminated such that the pair of the electrode main surfaces 2a or the pair of the counter electrode main surfaces 3 of the adjacent batteries 200 out of the multiple batteries 200 are adjacent to each other with the power generation element 1a not arranged therebetween but the connection layer 42. In other words, the adjacent batteries 200 are laminated such that the vertical relationship between the electrode main surface 2a and the counter electrode main surface 3a of each battery 200 is upside down. With thus laminating of the multiple batteries 200, short-circuit does not occur even when the pair of the electrode main surfaces 2a or the pair of the counter electrode main surfaces 3a of the adjacent batteries 200 are put in contact to each other, and thus the reliability can be improved.

Note that, as long as the multiple batteries 200 are laminated such that the pair of the electrode terminals 80a and the pair of the counter electrode terminals 90a of the adjacent batteries 200 are in contact with each other, one electrode main surface 2a and the other counter electrode main surface 3 of the adjacent batteries 200 may be laminated so as to be adjacent to each other. That is, as long as the pair of the electrode terminals 80a and the pair of the counter electrode terminals 90a of the adjacent batteries 200 are arranged to be in contact with each other, the multiple batteries 200 can be electrically connected to each other in parallel even when the multiple batteries 200 are laminated without concerning the vertical relationship between the electrode main surface 2a and the counter electrode main surface 3a.

The connection layer 42 is an electric insulation body, for example. The connection layer 42 is formed of, for example, the resin or the like exemplified in the descriptions of the above-described insulation film. Note that, the connection layer 42 may be formed of a conductive material having electronic conductivity. In this case, in order to prevent short-circuit, an insulation member is arranged or a clearance is provided such that heteropolar terminals are not electrically connected to each other and the heteropolar terminals are insulated.

The laminated battery 2000 can be formed by, for example, performing the lamination such that the pair of the electrode main surfaces 2a or the pair of the counter electrode main surfaces 3 of the adjacent batteries 200 are adjacent to each other after the material of the connection layer 42 is applied on the battery 200 if needed.

Additionally, patterns of the electrode main surface covering portion 62a and the counter electrode main surface covering portion 72a formed on the electrode main surface 2a and the counter electrode main surface 3a are formed so as to also be used as an alignment for position reference when the batteries 200 are laminated, and thus it is unnecessary to purposefully provide an alignment mark.

As described above, since the laminated battery 2000 has a structure in which the multiple batteries 200 are electrically connected to each other in parallel and laminated, the laminated battery 2000 with high reliability and large capacity can be implemented. Additionally, with the laminating of the multiple same batteries 200, the laminated battery 2000 with high reliability and large capacity can be implemented with high mass productivity.

Note that, the multiple batteries 200 may be electrically connected to each other in series to implement the laminated battery with high reliability and high energy.

### (Other Embodiments)

The battery and the laminated battery according to the present disclosure are described above based on the Embodiments and the Modifications; however, the present disclosure is not limited to those Embodiments and Modifications. An Embodiment with various Modifications apparent to those skilled in the art and another mode constructed by combining some of the constituents in the Embodiments may be included in the scope of the present disclosure without departing from the gist of the present disclosure.

For example, in the above-described Embodiments and Modifications, the electrode main surface and the counter electrode main surface include the electrode-exposed region and the counter electrode-exposed region, respectively; however, it is not limited thereto. At least either of the electrode insulation film and the counter electrode insulation film may cover both the electrode main surface and counter electrode main surface, and regions of the respective electrode main surface and counter electrode main surface that are covered with the insulation film may be in the same position and have the same size in plan view. In this case, for example, the insulation film of such a structure can be formed only by immersing the side surface of the power generation element into an applying liquid of the material of the insulation film to a depth desired to be covered with the insulation film, and thus the battery can be manufactured easily.

Additionally, for example, in the above-described Embodiments and Modifications, the battery includes the electrode terminal and the counter electrode terminal; however, it is not limited thereto. The battery may not include the electrode terminal and the counter electrode terminal, and the electrode terminal and the counter electrode terminal may be provided when the battery is mounted into an electronic device, an automobile, or the like.

Moreover, various changes, replacement, addition, omission, and the like may be made in the above-described Embodiments and Modifications within the scope of claims or the scope of equivalent thereof.

### Industrial Applicability

The battery and the laminated battery according to the present disclosure can be used as a secondary battery such as an all-solid-state battery used in various electronic devices, automobiles, or the like, for example.

### Reference Signs List

1, 1a power generation element
2, 2a electrode main surface
3, 3a counter electrode main surface
4, 4a electrode-exposed region
5, 5a counter electrode-exposed region
6, 6a first side surface
7, 7a second side surface
8 third side surface
10 electrode layer
11 electrode current collector
12 electrode active material layer
20 counter electrode layer
21 counter electrode current collector
22 counter electrode active material layer
30 solid electrolyte layer
40, 41, 42 connection layer
50 battery cell
60, 60a, 60b, 60c, 60d electrode insulation film
61, 61a, 61b, 61c, 61d first side surface covering portion
62, 62a, 62b, 62c, 62d electrode main surface covering portion
65b, 66b, 75b, 76b insulation layer
70, 70a, 70b, 70c, 70d, 70e counter electrode insulation film
71, 71a, 71b, 71c, 71d, 71e second side surface covering portion
72, 72a, 72b, 72c, 72d, 72e counter electrode main surface covering portion
80, 80a, 80c, 80d, 80e electrode terminal
81, 81a, 81c, 81d, 81e counter electrode insulation film covering portion
82, 82a, 82c, 82d, 82e electrode contact portion
90, 90a, 90c, 90d, 90e counter electrode terminal
91, 91a, 91c, 91d, 91e electrode insulation film covering portion
92, 92a, 92c, 92d, 92e counter electrode contact portion
100, 200, 200a, 300, 300a, 400, 400a, 500 battery
1000, 2000 laminated battery

## Claims

1. A battery, comprising:
a power generation element that includes at least one battery cell including an electrode layer, a counter electrode layer, and a solid electrolyte layer positioned between the electrode layer and the counter electrode layer;
an electrode insulation film;
a counter electrode insulation film;
an electrode terminal that is electrically connected to the electrode layer; and
a counter electrode terminal that is electrically connected to the counter electrode layer, wherein
the power generation element includes an electrode main surface that is a main surface formed of a surface of the electrode layer, a counter electrode main surface that is a main surface facing the electrode main surface and formed of a surface of the counter electrode layer, and a side surface,
the electrode insulation film includes a first side surface covering portion that covers a part of the side surface and an electrode main surface covering portion that covers the electrode main surface,
the counter electrode insulation film includes a second side surface covering portion that covers another part of the side surface and a counter electrode main surface covering portion that covers the counter electrode main surface,
the electrode terminal includes a counter electrode insulation film covering portion that covers the second side surface covering portion and an electrode contact portion that is in contact with the electrode main surface, and
the counter electrode terminal includes an electrode insulation film covering portion that covers the first side surface covering portion and a counter electrode contact portion that is in contact with the counter electrode main surface.

2. The battery according to claim 1, wherein
the electrode main surface includes an electrode-exposed region, which is not covered with the electrode insulation film and the counter electrode insulation film, in a position overlapped with the counter electrode main surface covering portion in plan view,
the counter electrode main surface includes a counter electrode-exposed region, which is not covered with the electrode insulation film and the counter electrode insulation film, in a position overlapped with the electrode main surface covering portion in plan view,
the electrode contact portion is in contact with the electrode-exposed region, and
the counter electrode contact portion is in contact with the counter electrode-exposed region.

3. The battery according to claim 1 or 2, wherein
the counter electrode insulation film covering portion covers the counter electrode main surface covering portion, and
the electrode insulation film covering portion covers the electrode main surface covering portion.

4. The battery according to any one of claims 1 to 3, wherein
at least either of the electrode insulation film and the counter electrode insulation film contains resin.

5. The battery according to any one of claims 1 to 4, wherein
the side surface includes a first side surface and a second side surface facing the first side surface,
the first side surface covering portion covers the first side surface, and
the second side surface covering portion covers the second side surface.

6. The battery according to any one of claims 1 to 5, wherein
at least either of the electrode terminal and the counter electrode terminal is formed of a conductive material containing resin.

7. The battery according to any one of claims 1 to 6, wherein
the electrode insulation film and the counter electrode insulation film each contain first thermosetting resin,
the electrode terminal and the counter electrode terminal each contain second thermosetting resin, and
a curing temperature of the first thermosetting resin is equal to or higher than a curing temperature of the second thermosetting resin.

8. The battery according to any one of claims 1 to 7, wherein
at least either of the electrode insulation film and the counter electrode insulation film has a lamination structure of a plurality of insulation layers.

9. The battery according to any one of claims 1 to 8, wherein
the electrode insulation film and the counter electrode insulation film are in contact with each other between the electrode terminal and the counter electrode terminal.

10. The battery according to any one of claims 1 to 9, wherein
the at least one battery cell is a plurality of battery cells, and
the plurality of battery cells are electrically connected to each other in series and laminated.

11. The battery according to any one of claims 1 to 10, wherein
the solid electrolyte layer includes a solid electrolyte having lithium-ion conductivity.

12. A laminated battery, comprising:
the plurality of the batteries according to any one of claims 1 to 11, wherein
the plurality of the batteries are electrically connected to each other in parallel and laminated.

13. The laminated battery according to claim 12, wherein
the plurality of the batteries are laminated such that a pair of the electrode main surfaces or a pair of the counter electrode main surfaces of adj acent batteries out of the plurality of the batteries are adjacent to each other.
